(19) Europäisches Patentamt
European Patent Office
Office européen des brevets

(11) EP 4 700 647 A1

(12) EUROPÄISCHE PATENTANMELDUNG

(43) Veröffentlichungstag:
25.02.2026 Patentblatt 2026/09

(21) Anmeldenummer: 25195036.6

(22) Anmeldetag: 11.08.2025

(51) Internationale Patentklassifikation (IPC):
*G06K 7/14* (2006.01)

(52) Gemeinsame Patentklassifikation (CPC):
G06K 7/1408; G06K 7/1413; G06K 7/1452

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
GE KH LA MA MD TN

(30) Priorität: 22.08.2024 DE 102024124050

(71) Anmelder: SICK AG
79183 Waldkirch (DE)

(72) Erfinder:
• ZIMMER, Julian
79114 Freiburg (DE)
• STEINBUCH, Jonathan
79211 Denzlingen (DE)

(74) Vertreter: Manitz Finsterwald
Patent- und Rechtsanwaltspartnerschaft mbB
Martin-Greif-Straße 1
80336 München (DE)

(54) **VERFAHREN ZUM LESEN VON BARCODES**

(57) Die Erfindung betrifft ein Verfahren zum Lesen von Barcodes, welches umfasst, dass: mittels einer Bilderfassungsvorrichtung ein Barcode erfasst wird, welcher Barcodeelemente in Form von Balken und Lücken umfasst, wobei die Balken und die zwischen den Balken angeordneten Lücken alternierend angeordnet sind, wobei ein jeweiliger Balken und/oder eine jeweilige Lücke einer Breitenstufe einer vordefinierten Anzahl von Breitenstufen zuordenbar ist, wobei jede Breitenstufe eine jeweilige Referenzbreite aufweist, ein Kantenfeld basierend auf dem erfassten Barcode erzeugt wird, wobei eine Kante im Kantenfeld einen Balken-Lücken-Übergang angibt, unter Verwendung des Kantenfelds ein Ähnlichkeitswert ermittelt wird, welcher eine Ähnlichkeit zwischen einer Verteilung von Balkenbreitenwerten und einer Verteilung von Lückenbreitenwerten angibt, wobei eine Anpassung des Kantenfelds erfolgt, wenn der Ähnlichkeitswert eine vorbestimmte Bedingung erfüllt, und der Barcode basierend auf dem Kantenfeld und/oder dem angepassten Kantenfeld dekodiert wird.

EP 4 700 647 A1

**Beschreibung**

Die Erfindung bezieht sich auf Verfahren zum Lesen von Barcodes sowie eine optoelektronische Codelesevorrichtung.

Das präzise und effiziente Lesen von Barcodes bzw. Strichcodes stellt eine zentrale Herausforderung in der Barcode-Technologie dar, insbesondere bei der Bewältigung von Verzerrungen, hervorgerufen durch Überdruck und Überbelichtung. Überdruck tritt auf, wenn ein Tintenstrahldrucker zu viel Tinte auf das Papier aufbringt, was dazu führt, dass die Balken eines Barcodes gleichmäßig breiter werden und die Lücken zwischen ihnen in entsprechendem Maße schmaler werden. Im Gegensatz dazu bewirkt Überbelichtung, dass durch übermäßiges Licht auf den Barcode die Balken schmaler und die Lücken entsprechend breiter erscheinen.

Derzeitige Technologien zur Dekodierung von Barcodes in solchen problematischen Situationen setzen auf eine "Brute-Force"-Methodik, bekannt als "Jittering". Bei diesem Ansatz wird zunächst ein Grauwertscan des Barcodes binarisiert, d.h in eine Schwarz-Weiß-Darstellung umgeformt, um ein Kantenfeld zu erzeugen. Aus diesem Kantenfeld werden anschließend zwei zusätzliche Varianten erstellt. In einer ersten Variante werden Balken um einen vordefinierten Wert verbreitert und die Lücken entsprechend verschmälert, während in einer zweiten Variante die Lücken um einen vordefinierten Wert verbreitert und die Balken entsprechend verschmälert werden. Die Originalvariante des Kantenfelds sowie die beiden erzeugten Variationen werden an den Dekoder übergeben, in der Hoffnung, dass eine der beiden Varianten einen Überbelichtungs- oder Überdruckeffekt kompensiert.

Diese Methode hat jedoch erhebliche Nachteile. Zum einen erhöht die Generierung und Dekodierung von drei Kantenfeldern statt nur einem die Dekodierlast um bis zu 200%, was zu einer massiven Erhöhung der Dekodierzeit führt. Zwar steigert dies die Erfolgsquote bei problematischen Lesesituationen wie Überdruck oder Überbelichtung, doch solche Probleme treten selten im Vergleich zu normalen Lesevorgängen auf. Dies bedeutet, dass die allgemeine Lesegeschwindigkeit beeinträchtigt wird, auch wenn keine Verzerrungen vorliegen. Zudem kann das Jittering-Verfahren zu weiteren Problemen führen, wie der Erzeugung von unnötigen Kantenfeldvarianten, die die Lesegenauigkeit verschlechtern können. Beispielsweise kann eine falsch angepasste Variante die Überdruck- oder Überbelichtungseffekte verstärken und somit zu einer Verschlechterung der Lesbarkeit des Barcodes führen.

Es ist eine Aufgabe der Erfindung ein verbessertes Verfahren zum Lesen von Barcodes sowie eine entsprechende optoelektronische Codelesevorrichtung bereitzustellen.

Diese Aufgabe wird durch die Gegenstände der unabhängigen Ansprüche gelöst.

Ein erster Aspekt der Erfindung bezieht sich auf ein Verfahren zum Lesen von Barcodes, welches umfasst, dass:

mittels einer Bilderfassungsvorrichtung ein Barcode erfasst wird, welcher Barcodeelemente in Form von Balken und Lücken umfasst, wobei die Balken und die zwischen den Balken angeordneten Lücken alternierend angeordnet sind, wobei ein jeweiliger Balken und/oder eine jeweilige Lücke einer Breitenstufe einer vordefinierten Anzahl von Breitenstufen zuordenbar ist, wobei jede Breitenstufe eine jeweilige Referenzbreite aufweist, ein Kantenfeld basierend auf dem erfassten Barcode erzeugt wird, wobei eine Kante im Kantenfeld einen Balken-Lücken-Übergang angibt, unter Verwendung des Kantenfelds ein Ähnlichkeitswert ermittelt wird, welcher eine Ähnlichkeit zwischen einer Verteilung von Balkenbreitenwerten und einer Verteilung von Lückenbreitenwerten angibt, wobei eine Anpassung des Kantenfelds erfolgt, wenn der Ähnlichkeitswert eine vorbestimmte Bedingung erfüllt, und der Barcode basierend auf dem Kantenfeld und/oder dem angepassten Kantenfeld dekodiert wird.

Mit anderen Worten wird vor einer Anpassung des Kantenfelds überprüft, ob die Verteilung der Breitenwerte der in dem Kantenfeld auftretenden Balken und die Verteilung der Breitenwerte der in dem Kantenfeld auftretenden Lücken signifikant voneinander abweichen. Eine signifikante Abweichung kann beispielsweise durch den Ähnlichkeitswert festgestellt werden. Insbesondere kann die Stärke der Abweichung anhand des Ähnlichkeitswerts festgestellt werden. Eine besonders starke Abweichung kann beispielsweise durch einen niedrigen Ähnlichkeitswert festgestellt werden, während eine geringe Abweichung durch einen hohen Ähnlichkeitswert festgestellt werden kann.

Wie bereits beschrieben, hat eine Überbelichtungssituation den Effekt, dass über das gesamte Kantenfeld die Breite eines jeweiligen Balkens kleiner, insbesondere kleiner als die Referenzbreite der zugehörigen Breitenstufe, wird und die Breite einer jeweiligen Lücke größer, insbesondere größer als die Referenzbreite der zugehörigen Breitenstufe, wird. Bei einer Überdrucksituation tritt hingegen der gegenteilige Effekt auf, d.h. über das gesamte Kantenfeld wird die Breite eines jeweiligen Balkens größer, insbesondere größer als die Referenzbreite der zugehörigen Breitenstufe, und die Breite einer jeweiligen Lücke wird kleiner, insbesondere kleiner als die Referenzbreite der zugehörigen Breitenstufe.

Im Folgenden wird zu Vereinfachung der Fall der Überdrucksituation zur Beschreibung der Erfindung herangezogen. Die Wirkung der Erfindung lässt sich aber auch anhand der Überbelichtungssituation beschreiben, wobei die Effekte auf die Lücken und Balken für diesen Fall entsprechend der vorstehenden Ausführungen anzupassen sind.

Die Erfindung geht von dem Grundgedanken aus, dass sich ein Verzerrungseffekt, der z.B. durch Überdruck oder Überbelichtung hervorgerufen wurde, insbesondere in der Verteilung der Balkenbreitenwerte und der Lückenbreitenwerte wiederspiegelt. Der Überdruckeffekt führt beispielsweise zu einer Verschiebung der Verteilung der Balkenbreitenwerte in Richtung höherer Breitenwerte, d.h. entlang der Breitenwertachse in eine positive X-Richtung. Gleichzeitig führt der Überdruckeffekt beispielsweise zu einer Verschiebung der Verteilung der Lückenbreitenwerte in Richtung niedrigerer Breitenwerte, d.h. entlang der Breitenwertachse in eine negative X-Richtung. Die jeweilige Verschiebung ist insbesondere abhängig von der Stärke des Überdrucks. Der Überdruck hat somit einen gegenteiligen Effekt auf die Verteilung der Balkenbreitenwerte und die Verteilung der Lückenbreitenwerte, da die beiden Verteilungen in entgegengesetzte Richtung verschoben werden. Diese gegenteilige Wirkung und somit das Vorliegen einer Überdrucksituation lässt sich demnach anhand eines Vergleichs der Verteilung von Balkenbreitenwerten und der Verteilung von Lückenbreitenwerten feststellen. Die Balkenbreitenwerte und Lückenbreitenwerte geben insbesondere die Breitenwerte der entsprechenden Balken und Lücken des Kantenfelds an.

Um eine Verzerrungssituation festzustellen, wird ein Ähnlichkeitswert ermittelt, welcher eine Ähnlichkeit zwischen der Verteilung der Balkenbreitenwerte und der Verteilung der Lückenbreitenwerte angibt. Wenn der Ähnlichkeitswert eine vorbestimmte Bedingung erfüllt, beispielsweise wenn der Ähnlichkeitswert einen vorbestimmten Ähnlichkeitsschwellenwert unterschreitet, erfolgt eine Anpassung des Kantenfelds. In allen anderen Fällen kann auf eine Anpassung verzichtet werden, da die Verteilung der Balkenbreitenwerte und die Verteilung der Lückenbreitenwerte ausreichend ähnlich ist, d.h eine geringe Abweichung vorliegt, beispielsweise wenn der Ähnlichkeitswert einen vorbestimmten Ähnlichkeitsschwellenwert überschreitet, und hierdurch das Vorliegen einer Verzerrungssituation, z.B. einer Überdruckoder Überbelichtungssituation, ausgeschlossen werden kann. Die Dekodierung des Barcodes erfolgt anschließend basierend auf dem Kantenfeld und/oder dem angepassten Kantenfeld. Insbesondere wenn eine Anpassung erfolgt ist, erfolgt die Dekodierung des Barcodes basierend auf dem angepassten Kantenfeld. Wenn hingegen keine Anpassung erfolgt ist, erfolgt die Dekodierung des Barcodes beispielsweise basierend auf dem Kantenfeld. Die dekodierten Informationen können anschließend zur Steuerung einer industriellen Maschine, z.B. einer (Paket-)Sortiermaschine oder eines Roboter zur Lagerverwaltung, zur Produktidentifikation, zur Sendungsverfolgung von Paketen und dergleichen genutzt werden.

Das Verfahren bezieht sich insbesondere auf Barcodes, bei denen die Balken und Lücken entsprechenden Breitenstufen zugeordnet werden, d.h. der Barcode verwendet eine vordefinierte Anzahl von Breitenstufen für Lücken und eine vordefinierte Anzahl von Breitenstufen für Balken, wobei die Breitenstufen für die Balken und die Breitenstufen für die Lücken vorzugsweise identisch sind. Insbesondere weisen die jeweiligen Breitenstufen unterschiedliche Referenzbreiten auf. Die Referenzbreite einer jeweiligen Breitenstufe kann einem Vielfachen der Referenzbreite einer ersten Breitenstufe entsprechen. Beispielsweise kann die Referenzbreite einer zweiten Breitenstufe dem zweifachen der Referenzbreite der ersten Breitenstufe und die Referenzbreite einer dritten Breitenstufe dem Dreifachen der Referenzbreite der ersten Breitenstufe entsprechen usw. Die Referenzbreite der ersten Breitenstufe kann beispielsweise die Modulgröße sein. Die Referenzbreiten der Breitenstufen können beispielsweise durch einen Standard, z.B. UPC, Code 128 oder Code 39, vorgegeben sein.

Wie bereits beschrieben, wird das Kantenfeld basierend auf dem erfassten Barcode erzeugt. Beispielsweise wird der Barcode als Grauwertscan erfasst und in ein Kantenfeld umgewandelt, welches einer binarisierten Darstellung des erfassten Grauwertscans, d.h. einer Schwarz-Weiß-Darstellung, entspricht. Eine Kante im Kantenfeld kann ferner durch einen Übergang von einem Bereich geringerer Intensität zu einem Bereich höherer Intensität oder umgekehrt, z.B. durch einen Schwarz-Weiß-Übergang, gekennzeichnet sein. Es ist auch denkbar, dass die Ausrichtung des erfassten Barcodes oder des Kantenfelds angepasst wird, falls diese nicht einer bevorzugten Leserichtung entspricht. Beispielsweise kann die Ausrichtung des erfassten Barcodes oder des Kantenfelds anhand eines Winkels der Kanten angepasst werden, sodass die Kanten des ausgerichteten erfassten Barcodes oder des ausgerichteten Kantenfelds vertikal verlaufen.

Die Balken und Lücken stellen Barcodeelemente dar, welche sich in horizontaler Richtung und in vertikaler Richtung erstrecken, wobei sich die Breite der Lücken und die Breite der Balken auf eine Erstreckung in horizontaler Richtung bezieht. Die Balken eines erfassten Barcodes sind in dem Kantenfeld beispielsweise durch eine Gruppe von schwarzen Pixeln dargestellt, während die Lücken durch eine Gruppe von weißen Pixeln dargestellt sind. Ferner wird die Breite der Balken und die Breite der Lücken vorzugsweise in Pixel angegeben, d.h. der Breitenwert x entspricht der Breite von x Pixeln. Wenn vorstehend oder nachfolgend von einem Balken oder einer Lücke in Bezug auf das Kantenfeld die Rede ist, ist damit die Darstellung eines jeweiligen Balkens bzw. einer jeweiligen Lücke des Barcodes in dem Kantenfeld gemeint, wobei diese Darstellung von der tatsächlichen Darstellung auf dem Barcode beispielsweise aufgrund eines Überbelichtungseffekts abweichen kann.

Erfindungsgemäß wird die Dekodierlast dahingehend reduziert, dass neue, d.h. angepasste, Kantenfelder nur dann generiert werden, falls eine problematische Situation, z.B. eine Überbelichtungs- oder eine Überdrucksituation, vorliegt. Ferner wird die Performanz der Dekodierung verbessert, da in vielen Fällen keine Kantenfelder generiert werden, was zu einer Einsparung von Berechnungszeit in den folgenden Einzeldekodern führt. In Fällen, in denen eine Anpassung erforderlich ist und durchgeführt wird, wird außerdem nur ein angepasstes Kantenfeld generiert, während gemäß dem Jittering-Verfahren des Stands der Technik stets zwei Kantenfeldvariationen generiert werden, von denen eine Variante sogar eine Verstärkung des Problems umfasst.

Weitere Ausführungsformen der Erfindung sind der Beschreibung, den Unteransprüchen und den Zeichnungen zu entnehmen.

Gemäß einer ersten Ausführungsform wird die Verteilung der Balkenbreitenwerte anhand eines normalisierten Balkenbreitenhistogramms und die Verteilung der Lückenbreitenwerte anhand eines normalisierten Lückenbreitenhistogramms ermittelt, wobei der Ähnlichkeitswert $z_{sim,1}$ beispielsweise basierend auf folgender Gleichung ermittelt wird:

$$z_{sim,1} = 1 - \sum_i \frac{(b_i - l_i)^2}{2 * (b_i - l_i)} \qquad (1)$$

wobei $b_i$ den Histogrammwert des Balkenbreitenhistogramms für den i-ten Breitenwert und $l_i$ den Histogrammwert des Lückenbreitenhistogramms für den i-ten Breitenwert angibt, wobei eine Anpassung des Kantenfelds erfolgt, wenn der Ähnlichkeitswert kleiner als ein vorbestimmter Ähnlichkeitsschwellenwert ist.

Das Balkenbreitenhistogramm und das Lückenbreitenhistogramm wird insbesondere anhand der in dem Kantenfeld auftretenden Balkenbreitenwerte und der in dem Kantenfeld auftretenden Lückenbreitenwerte erstellt. Die Histogrammwerte geben insbesondere eine relative Häufigkeit der auftretenden Breitenwerte an, wobei einem nicht vorkommenden Breitenwert der Histogrammwert 0 zugeordnet wird. Die Histogrammwerte des Balkenbreitenhistogramms geben beispielsweise eine relative Häufigkeit der auftretenden Balkenbreitenwerte an, während die Histogrammwerte des Lückenbreitenhistogramms eine relative Häufigkeit der auftretenden Lückenbreitenwerte angeben. Die Y-Achse eines jeweiligen Histogramms gibt somit die relative Häufigkeit und die X-Achse den Breitenwert an. Durch die Normalisierung der Histogrammwerte ergibt die Summe der Histogrammwerte des Balkenbreitenhistogramms und die Summe der Histogrammwerte des Lückenbreitenhistogramms jeweils 1. Die Balkenbreitenwerte und die Lückenbreitenwerte können als ganzzahlige Werte angegeben werden, welche die jeweilige Breite in Abhängigkeit der Pixelanzahl angeben, d.h. der Breitenwert 2 entspricht beispielsweise der Breite von 2 Pixeln. Die Verwendung ganzzahliger Werte führt unter anderem zur Vereinfachung der Berechnungen. Der Ähnlichkeitswert $z_{sim,1}$ kann Werte zwischen 0 und 1 annehmen, wobei der Wert 1 eine maximale Ähnlichkeit angibt und der Wert 0 eine maximale Unähnlichkeit angibt. Ist der Ähnlichkeitswert somit kleiner als ein vorbestimmter Ähnlichkeitsschwellenwert, so kann festgestellt werden, dass eine Überdruck- oder Überbelichtungssituation vorliegt. Der Ähnlichkeitsschwellenwert kann beispielsweise mittels einer Heuristik, z.B. basierend auf Erfahrungswerten, vorab festgelegt werden oder durch eine KI ermittelt werden. Der Ähnlichkeitswert $z_{sim,1}$ wird insbesondere gemäß der Qui-Quadrat-Ähnlichkeit (vgl. Gleichung 1) berechnet. Die Feststellung einer Verzerrungssituation basierend auf dem ermittelten Ähnlichkeitswert ist bei dieser Ausführungsform besonders zuverlässig und robust.

Gemäß einer Ausführungsform wird die Verteilung der Balkenbreitenwerte anhand eines normalisierten Balkenbreitenhistogramms und die Verteilung der Lückenbreitenwerte anhand eines normalisierten Lückenbreitenhistogramms ermittelt, wobei eine erste Schätzung $z_1$ einer Referenzbreite einer ersten Breitenstufe auf Basis der Balkenbreitenwerte und eine zweite Schätzung $z_2$ der Referenzbreite der ersten Breitenstufe auf Basis der Lückenbreitenwerte erfolgt, wobei der Ähnlichkeitswert $z_{sim,2}$ basierend auf einer Differenz zwischen der ersten Schätzung $z_1$ und der zweiten Schätzung $z_2$ ermittelt wird.

Dieser Ausführungsform liegt der Gedanke zugrunde, dass die durch einen Verzerrungseffekt, z.B. Überdruck oder Überbelichtung, entstandene Verschiebung des Balkenbreitenhistogramms und des Lückenbreitenhistogramms anhand der Differenz bzw. dem Versatz einer erste Schätzung der Referenzbreite einer Breitenstufe, welche auf den Balkenbreitenwerten basiert, und einer zweiten Schätzung der Referenzbreite derselben Breitenstufe, welche auf den Lückenbreitenwerten basiert, festgestellt werden kann. Dies stützt sich auf die Erkenntnis, dass die erste Schätzung und die zweite Schätzung in einem unverzerrten Fall nahe beieinander liegen und somit eine Differenz zwischen der ersten Schätzung und der zweiten Schätzung klein ist, während der Abstand zwischen der ersten Schätzung und der zweiten Schätzung mit zunehmender Verzerrung größer wird. Der Ähnlichkeitswert $z_{sim,2}$ kann beispielsweise dem Betrag der Differenz zwischen der ersten Schätzung und der zweiten Schätzung entsprechen:

$$z_{sim,2} = |z_1 - z_2| \qquad (2)$$

wobei $z_1$ der ersten Schätzung und $z_2$ der zweiten Schätzung entspricht. Dementsprechend kann eine Anpassung des Kantenfelds erfolgen, wenn der Ähnlichkeitswert größer als ein vorbestimmter Ähnlichkeitsschwellenwert ist. Falls die erste Schätzung um den vorbestimmten Ähnlichkeitsschwellenwert größer als die zweite Schätzung ist, kann beispielsweise eine Überdrucksituation festgestellt werden. Im umgekehrten Fall kann eine Überbelichtungssituation festgestellt werden.

Alternativ kann der Ähnlichkeitswert $z_{sim,2}$ basierend auf folgender Gleichung ermittelt werden:

$$z_{sim,2} = \frac{1}{e^{|z_1 - z_2|}} \qquad (3)$$

wobei $z_1$ der ersten Schätzung und $z_2$ der zweiten Schätzung entspricht. Der Ähnlichkeitswert $z_{sim,2}$ kann gemäß Gleichung 3 Werte zwischen 0 und 1 annehmen, wobei der Wert 1 eine maximale Ähnlichkeit angibt und der Wert 0 eine maximale Unähnlichkeit angibt. Eine Anpassung des Kantenfelds erfolgt in diesem Fall beispielsweise, wenn der Ähnlichkeitswert kleiner als ein vorbestimmter Ähnlichkeitsschwellenwert ist.

Der Ähnlichkeitsschwellenwert $z_{sim,2}$ kann beispielsweise mittels einer Heuristik, z.B. basierend auf Erfahrungswerten, vorab festgelegt werden oder durch eine KI ermittelt werden. Diese Ausführungsform zeichnet sich dadurch aus, dass die Ermittlung des Ähnlichkeitswerts vergleichsweise schnell erfolgt, wobei eine geringere Robustheit der Ergebnisse im Vergleich zur ersten Ausführungsform in Kauf genommen wird.

Die Begriffe "erste Schätzung" und "zweite Schätzung" beziehen sich nachfolgend, falls nichts anderes angegeben ist, auf die erste Schätzung der Referenzbreite der ersten Breitenstufe auf Basis der Balkenbreitenwerte und die zweite Schätzung der Referenzbreite der ersten Breitenstufe auf Basis der Lückenbreitenwerte.

Gemäß einer Ausführungsform erfolgt die erste Schätzung $z_1$ unter Verwendung des normalisierten Balkenbreitenhistogramms, wobei die Histogrammwerte des Balkenbreitenhistogramms gemäß der folgenden Gleichung aufaddiert werden:

$$b_{sum} = \sum_{i=1}^{x} b_i \qquad (4)$$

wobei $b_{sum}$ der Summe der Balkenbreitenhistogrammwerte für den ersten bis x-ten Breitenwert entspricht, $b_i$ dem Balkenbreitenhistogrammwert für den i-ten Breitenwert entspricht, i den Index des Breitenwerts angibt, und x den Index des Breitenwerts angibt, für den die Bedingung $b_{sum}$ > *erster Schwellenwert* erfüllt ist,

wobei der x-te Breitenwert als erste Schätzung $z_1$ festgelegt wird oder die erste Schätzung $z_1$ als gewichteter Balkenbreitenwert gemäß der Gleichung $z_1 = \sum_{i=1}^{x} \frac{b_i}{b_{sum}} \cdot B(i)$ berechnet wird, wobei $B(i)$ den i-ten Breitenwert angibt,

wobei die zweite Schätzung $z_2$ unter Verwendung des normalisierten Lückenbreitenhistogramms erfolgt, wobei die Histogrammwerte des Lückenbreitenhistogramms gemäß der folgenden Gleichung aufaddiert werden:

$$l_{sum} = \sum_{i=1}^{y} l_i \qquad (5)$$

wobei $l_{sum}$ der Summe der Lückenbreitenhistogrammwerte für den ersten bis x-ten Breitenwert entspricht, $l_i$ dem Lückenbreitenhistogrammwert für den i-ten Breitenwert entspricht, i den Index des Breitenwerts angibt, und y den Index des Breitenwerts angibt, für den die Bedingung $l_{sum}$ > *zweiter Schwellenwert* erfüllt ist,

wobei der y-te Breitenwert als zweite Schätzung $z_2$ festgelegt wird oder die zweite Schätzung $z_2$ als gewichteter Lückenbreitenwert gemäß der Gleichung $z_2 = \sum_{i=1}^{y} \frac{l_i}{l_{sum}} \cdot B(i)$ berechnet wird, wobei *B(i)* den i-ten Breitenwert angibt.

Mit anderen Worten werden beginnend mit dem Histogrammwert des kleinsten Breitenwerts, d.h. des Balkenbreitenwerts bzw. Lückenbreitenwerts für i=1, wobei der Breitenwert für i=1 beispielsweise einer Pixelbreite entspricht, die Histogrammwerte, d.h. die relative Häufigkeit der Breitenwerte, iterativ aufaddiert bis der aufaddierte Histogrammwert einen ersten bzw. zweiten Schwellenwert überschreitet. Diese Bedingung stellt sicher, dass zumindest eine vorbestimmte, insbesondere relative, Anzahl von Breitenwerten für die Bestimmung der ersten bzw. zweiten Schätzung berücksichtigt werden. Die vorbestimmte relative Anzahl wird beispielsweise durch den ersten bzw. zweiten Schwellenwert festgelegt. Der x-te bzw. y-te Breitenwert des zugehörigen Histogrammwerts, ab dem diese Bedingung erfüllt ist, kann als erste bzw. zweite Schätzung festgelegt werden. Alternativ kann die erste bzw. zweite Schätzung als gewichtete Schätzung ermittelt werden, wobei durch die gewichtete Schätzung beispielsweise die relative Häufigkeit der einzelnen auftretenden Breitenwerte für i=1 bis i=x bzw. i=y bei der Berechnung der ersten bzw. zweiten Schätzung berücksichtigt werden.

Insbesondere entspricht der erste Schwellenwert dem zweiten Schwellenwert. Ferner kann der erste und/oder zweite Schwellenwert in Abhängigkeit der Anzahl der Breitenstufen festgelegt sein. Beispielsweise kann der erste und/oder zweite Schwellenwert kleiner sein als $\frac{1}{Anzahl\ der\ Breitenstufen}$ . Insbesondere beträgt der erste und/oder zweite Schwellenwert 0,2 oder 0,25, wenn die vorgegebene Anzahl von Breitenstufen 4 beträgt. Alternativ kann der der erste und/oder zweite Schwellenwert 0,4 oder 0,5 betragen, wenn die vorgegebene Anzahl von Breitenstufen 2 beträgt.

Gemäß einer Ausführungsform ist die Referenzbreite der ersten Breitenstufe die Modulgröße. Die Modulgröße entspricht bekanntermaßen der Sollbreite des schmalsten einzelnen Balkens und/oder der schmalsten Lücke im Barcode. In der Regel ist die Sollbreite des schmalsten einzelnen Balkens gleich der Sollbreite der schmalsten einzelnen Lücke. Die Modulgröße dient beispielsweise als Basismaß, von dem ausgehend die weiteren Referenzbreiten der Balken und Lücken bestimmt werden können. Die Modulgröße kann beispielsweise in Millimetern oder Zoll, vorzugsweise in Pixeln, angegeben werden. Die Modulgröße hat die geringste Referenzbreite verglichen mit den Referenzbreiten der weiteren Breitenstufen. Die Modulgröße und/oder die Referenzbreiten der weiteren Breitenstufen sind insbesondere bekannt.

Die Modulgröße kann je nach Verwendungszweck des Barcodes variieren. Gemäß UPC-A-Code beträgt die Modulgröße beispielsweise etwa 0,26 mm (0,01 Zoll). Gemäß Code 128 kann die Modulgröße variieren, liegt aber oftmals zwischen 0,254 mm (0,01 Zoll) und 0,508 mm (0,02 Zoll), abhängig von der Druckauflösung und dem Verwendungszweck. Im Code 39 kann die Modulgröße ebenfalls variieren, typischerweise liegt sie jedoch zwischen 0,508 mm (0,02 Zoll) und 1,27 mm (0,05 Zoll).

Gemäß einer Ausführungsform umfasst das Kantenfeld eine Vielzahl von Pixeln, wobei die einem Balken zugehörigen Pixel eine erste Pixelfarbe aufweisen und die einer Lücke zugehörigen Pixel eine zweite Pixelfarbe aufweisen, welche sich von der ersten Pixelfarbe unterscheidet, wobei der Ähnlichkeitswert einem Verhältnis von Pixeln mit einer ersten Pixelfarbe und Pixeln mit einer zweiten Pixelfarbe entspricht, wobei eine Anpassung des Kantenfelds erfolgt, wenn der Ähnlichkeitswert größer als ein vorbestimmter erster Ähnlichkeitsschwellenwert oder kleiner als ein zweiter Ähnlichkeitsschwellenwert ist.

Typischerweise ist die erste Pixelfarbe schwarz und die zweite Pixelfarbe weiß. Da eine Überdruck- oder Überbelichtungssituation dazu führt, dass die Balken eines Barcodes breiter und die Lücken gleichzeitig schmaler werden oder umgekehrt, führt eine solche Situation auch dazu, dass sich das Verhältnis von weißen zu schwarzen Pixeln im Kantenfeld eines überdruckten bzw. überbelichteten Codes im Vergleich zum "perfekten" Referenzbarcode verändert bzw. verschiebt. Um das Vorliegen einer Verzerrungssituation zu erkennen, kann also das Verhältnis von weißen zu schwarzen Pixeln berechnet werden, wobei ein stark abweichendes Verhältnis auf Überdruck oder Überbelichtung hinweist.

Mittels einer Heuristik kann beispielsweise ein, insbesondere im Vergleich zu einem zweiten Ähnlichkeitsschwellenwert, niedriger erster Ähnlichkeitsschwellen-wert für das Feststellen eines Überdrucks und ein, insbesondere im Vergleich zum ersten Ähnlichkeitsschwellenwert, hoher zweiter Ähnlichkeitsschwellenwert für das Feststellen einer Überbelichtung festgelegt werden, wenn das Verhältnis

$$\frac{Anzahl\ wei\beta e\ Pixel}{Anzahl\ schwarze\ Pixel}$$

bestimmt wird. Ein Vorteil dieser Methodik ist die schnelle Berechnung, da sie keine aufwändige Bildung und Analyse von Histogrammen erfordert.

Gemäß einer Ausführungsform wird der Ähnlichkeitswert unter Verwendung einer KI erzeugt, wobei die Trainingsdaten der KI eine Vielzahl von Beispielkantenfeldern und zugehörigen Labeln umfasst, wobei das Label eines zugehörigen Beispielkantenfelds eine Ähnlichkeit zwischen einer Verteilung von Balkenbreitenwerten des zugehörigen Beispielkantenfelds und einer Verteilung von Lückenbreitenwerten des zugehörigen Beispielkantenfelds angibt. Die KI kann ferner auch mit Daten des vorstehend genannten Balkenbreitenhistogramms und des Lückenbreitenhistogramms als Trainingsdaten trainiert worden sein. Ferner kann die KI eine Bilderkennungs-KI umfassen, z.B. ein CNN oder einen Autoencoder. Weiter können die vorstehend genannten Heuristikmethoden in Kombination mit der KI verwendet werden, um den Ähnlichkeitswert zu erzeugen.

Gemäß einer Ausführungsform umfasst die Anpassung des Kantenfelds, dass basierend auf einer Schätzungsdifferenz, die einer Differenz der ersten Schätzung und der zweiten Schätzung entspricht, ein Verschiebungswert ermittelt wird, und basierend auf dem Verschiebungswert das Kantenfeld angepasst wird. Wie bereits vorstehend beschrieben, kann eine Verzerrungssituation basierend auf der Differenz zwischen der ersten Schätzung und der zweiten Schätzung festgestellt werden. Insbesondere gibt die Schätzungsdifferenz ein Ausmaß bzw. eine Stärke der Verzerrung an. Die Schätzungsdifferenz kann somit auch genutzt werden, um den Verzerrungseffekt zu kompensieren, indem die Kanten des Kantenfelds beispielsweise um einen Verschiebungswert verschoben werden, welcher auf der Schätzungsdifferenz basiert. Insbesondere werden alle Kanten des Kantenfelds um denselben Verschiebungswert verschoben. Dies ist dadurch begründet, dass der Verzerrungseffekt die Balken und Lücken des Barcodes bzw. des Kantenfelds in gleichem Maße beeinflusst. Demensprechend betrifft die durch den Verzerrungseffekt begründete Veränderung der Position einer Kante im Vergleich zu ihrer vorherigen Referenzposition jede Kante in gleichem Ausmaß. Ein ganzheitlicher, generischer Lösungsansatz, bei dem alle Kanten in gleicher Weise angepasst bzw. verschoben werden, ist daher sinnvoll. Es wird also eine angepasste Kantenfeldvariante erzeugt, wobei im Gegensatz zum Jittering-Verfahren des Stands der Technik, bei dem die Anpassung basierend auf vorgegebenen Verschiebungswerten erfolgt, die angepasste Kantenfeldvariante basierend auf den aus dem Kantenfeld extrahierten Unterschieden zwischen der Verteilung der Balkenbreitenwerte und der Lückenbreitenwerte erzeugt wird. Diese Vorgehensweise kann daher auch als eine Art "adaptives Jittering" verstanden werden.

Ein Vorteil dieses adaptiven Verfahrens ist es, dass es sich deutlich besser an die Lesesituation anpasst. Die globale Verschiebung mit dem ermittelten Verschiebungswert, welche die Kanten des Kantenfelds derart verschiebt, dass eine Verzerrungssituation kompensiert wird, wird genau passend bestimmt, so dass sie der realen Situation im Kantenfeld entgegenwirkt. Damit wird bei stärkerem Überdruck auch stärker korrigiert als bei leichtem Überdruck. Dasselbe gilt für Fälle mit Überbelichtung.

Gemäß einer Ausführungsform wird basierend auf der Schätzungsdifferenz ein Histogrammverschiebungswert ermittelt (Verfahrensschritt 1), wobei das Balkenbreitenhistogramm und/oder das Lückenbreitenhistogramm um den Histogrammverschiebungswert verschoben werden (Verfahrensschritt 2), wobei ein weiterer Ähnlichkeitswert gemäß einem der vorstehenden Verfahren für das verschobene Balkenbreitenhistogramm und das Lückenbreitenhistogramm, für das verschobene Lückenbreitenhistogramm und das Balkenbreitenhistogramm oder für das verschobene Balkenbreitenhistogramm und das verschobene Lückenbreitenhistogramm ermittelt wird (Verfahrensschritt 3), wobei eine Anpassung des Kantenfelds basierend auf dem Verschiebungswert, welcher basierend auf dem Histogrammverschiebungswert ermittelt wird, erfolgt, wenn der weitere Ähnlichkeitswert eine vorbestimmte Bedingung erfüllt (Verfahrensschritt 4).

Bevor eine Anpassung des Kantenfelds erfolgt kann somit geprüft werden, ob eine Verschiebung zu einem verbesserten Ähnlichkeitsergebnis führt, d.h. ob sich die Ähnlichkeit zwischen der Verteilung der Balkenbreitenwerte und der Verteilung der Lückenbreitenwerte verbessert hat. Anders ausgedrückt, wird überprüft, ob eine potentielle Anpassung des Kantenfelds dazu führt, dass die Abweichung der Balkenbreitenwerte von den Lückenbreitenwerten, welche derselben Breitenstufe zugehörig sind, tendenziell reduziert wird und damit näher an ihrer zugehörigen Referenzbreite liegen.

Beispielsweise wird hierfür eines der Histogramme um den Histogrammverschiebungswert verschoben, welcher beispielsweise dem Betrag der Differenz der ersten Schätzung und der zweiten Schätzung entspricht, während das jeweils andere Histogramm nicht verschoben wird. Alternativ können auch beide Histogramme um denselben Histogrammverschiebungswert verschoben werden, welcher in einem solchen Fall insbesondere der Hälfte des Betrags der Differenz zwischen der ersten und zweiten Schätzung entspricht.

Ist die Differenz zwischen der ersten und zweiten Schätzung beispielweise positiv, kann hierdurch eine Überdrucksituation festgestellt werden und das

Balkenbreitenhistogramm wird um den Differenzbetrag in eine negative X-Richtung oder das Lückenbreitenhistogramm um den Differenzbetrag in eine positive X-Richtung verschoben. Alternativ kann in einem solchen Fall das Balkenbreitenhistogramm um $\frac{1}{2} \cdot Differenzbetrag$ in eine negative X-Richtung und das Lückenbreitenhistogramm um $\frac{1}{2} \cdot Differenzbetrag$ in eine positive X-Richtung verschoben werden.

Ist die Differenz zwischen der ersten und zweiten Schätzung beispielsweise negativ, kann hierdurch eine Überbelichtungssituation festgestellt werden und das Balkenbreitenhistogramm wird um den Differenzbetrag in eine positive X-Richtung oder das Lückenbreitenhistogramm um den Differenzbetrag in eine negative X-Richtung verschoben. Alternativ kann in einem solchen Fall das Balkenbreitenhistogramm um $\frac{1}{2} \cdot Differenzbetrag$ in eine positive X-Richtung und das Lückenbreitenhistogramm $\frac{1}{2} \cdot Differenzbetrag$ in eine negative X-Richtung verschoben werden.

$$Histogrammverschiebungswert = \frac{1}{2} \cdot Differenzbetrag$$

Ist der so kann es passieren, dass der Histogrammverschiebungswert keine ganze Zahl ist. In solchen Fällen kann der Histogrammverschiebungswert für die Verschiebung eines Histogramms auf eine ganze Zahl aufgerundet werden und für die Verschiebung des jeweils anderen Histogramms auf eine ganze Zahl abgerundet werden. Die Verschiebung eines Histogramms ist gleichbedeutend mit einer Anpassung der Zuordnung von Breitenwerten und Histogrammwerten eines zugehörigen Histogramms. Beispielsweise wird mit einer Verschiebung jedem Histogrammwert nunmehr ein um den Histogrammverschiebungswert kleinerer bzw. größerer Breitenwert zugeordnet. Der Verschiebungswert kann insbesondere basierend auf dem Histogrammverschiebungswert ermittelt werden. Beispielsweise kann der Verschiebungswert in Fällen, in denen nur eines der

$$Verschiebungswert = \frac{1}{4} \cdot \quad Histogrammverschiebungswert$$

Histogramme verschoben wird, be- tragen, während der Verschiebungswert in den Fällen in denen beide Histogramme, d.h. das Balkenbreitenhistogramm und das Lückenbreitenhistogramm, verschoben werden,

$$Verschiebungswert = \frac{1}{2} \cdot \quad Histogrammverschiebungswert$$

betragen kann. Ist der Verschiebungswert keine ganze Zahl, so kann der Verschiebungswert auf eine ganze Zahl ab- bzw. aufgerundet werden, um eine Verschiebung der Kanten um eine entsprechende Anzahl an Pixeln zu ermöglichen.

Gemäß einer Ausführungsform wird der Histogrammverschiebungswert mit einer vorgegebenen Anzahl von Rauschwerten addiert wird, um zusätzliche Histogrammverschiebungswerte zu erzeugen, wobei die Verfahrensschritte 2 und 3 der vorstehenden Ausführungsform ferner für die zusätzlichen Histogrammverschiebungswerte durchgeführt werden und entsprechende zusätzliche Ähnlichkeitswerte erzeugt werden,
wobei der Histogrammverschiebungswert oder einer der zusätzlichen Histogrammverschiebungswerte, welcher dem betragsmäßig größten Ähnlichkeitswert des weiteren Ähnlichkeitswerts und der zusätzlichen Ähnlichkeitswerte zugehörig ist, dazu verwendet wird, um den Verschiebungswert für die Anpassung des Kantenfelds zu ermitteln.

Hierdurch kann insbesondere die Robustheit der Ergebnisse verbessert werden, da eine Vielzahl weiterer Verschiebungen getestet wird. Die Rauschwerte können kleine Werte, insbesondere die in Bezug auf die Auflösung kleinsten Werte, annehmen. Werden Breitenwerte beispielsweise in Pixel angegeben, können die Rauschwert 1 und -1 sein, was einer Vergrößerung bzw. Verkleinerung des Histogrammverschiebungswert um 1 Pixelbreite entspricht. Basierend auf den daraus resultierenden zwei zusätzlichen Histogrammverschiebungswerten können zwei zusätzliche Ähnlichkeitswerte ermittelt werden. Wird für einen der zusätzlichen Histogrammverschiebungswerte ein verbessertes Ähnlichkeitsergebnis im Vergleich zu dem Histogrammverschiebungswert erzielt, kann der entsprechende zusätzliche Histogrammverschiebungswert verwendet werden, um den Verschiebungswert zu ermitteln, mit dem die Anpassung des Kantenfelds erfolgt. Wenn mehrere größte Ähnlichkeitswerte vorliegen, kann beispielsweise per Zufall entschieden werden, welcher zugehöriger Histogrammverschiebungswert ausgewählt wird, oder es kann der Histogrammverschiebungswert ausgewählt werden, welcher den geringsten Betrag hat und somit die geringste Anpassung der Kanten des Kantenfelds zur Folge hat.

Gemäß einer Ausführungsform umfasst die Anpassung des Kantenfelds eine erste Anpassung, welche umfasst, dass für alle Kanten des Kantenfelds:

wenn die erste Schätzung kleiner als die zweite Schätzung ist, die Kanten eines jeweiligen Balkens um den Verschiebungswert, insbesondere in entgegengesetzte, divergierende Richtungen, derart verschoben werden, dass die Breite des jeweiligen Balkens um die Hälfte des Betrags der Schätzungsdifferenz vergrößert wird, und die Kanten einer jeweiligen Lücke um den Verschiebungswert, insbesondere in entgegengesetzte, konvergierende Richtungen, derart verschoben werden, dass die Breite der jeweiligen Lücke um die Hälfte des Betrags der Schätzungsdifferenz verkleinert wird,
wobei, wenn die erste Schätzung größer als die zweite Schätzung ist, die Kanten eines jeweiligen Balkens um den Verschiebungswert, insbesondere in entgegengesetzte, konvergierende Richtungen, derart verschoben werden, dass die Breite des jeweiligen Balkens um die Hälfte des Betrags der Schätzungsdifferenz verkleinert wird, und die Kanten der jeweiligen Lücke um den Verschiebungswert, insbesondere in entgegengesetzte, divergierende Richtungen, derart verschoben werden, dass die Breite der jeweiligen Lücke um die Hälfte des Betrags der Schätzungsdifferenz verkleinert wird,
wobei der Verschiebungswert einem Viertel des Betrags der Schätzungsdifferenz entspricht.

Die Einstellung der Verschiebungswerts auf den vorstehenden Betrag ergibt sich wie folgt: Da die erste Schätzung einer Schätzung der Referenzbreite der ersten Breitenstufe auf Basis der Balkenbreitenwerten entspricht und die zweite Schätzung einer Schätzung der Referenzbreite der ersten Breitenstufe auf Basis der Lückenbreitenwerten, sollte die tatsächliche Referenzbreite zwischen diesen beiden Schätzungen liegen. Demzufolge kann ein Mittel der ersten und zweiten Schätzung als geschätzte Referenzbreite der ersten Breitenstufe festgelegt werden. Die Abweichung der ersten und/oder zweiten Schätzung von der gemittelten geschätzten Referenzbreite entspricht dann dem Differenzbreitenwert, um den eine jeweilige Balkenbreite oder eine jeweilige Lückenbreite vergrößert bzw. verkleinert wird bzw. werden sollte. Dieser Differenzbreitenwert entspricht insbesondere der Hälfte des Betrags der Differenz zwischen der ersten und zweiten Schätzung. Da ein Balken bzw. eine Lücke zwei angrenzende Kanten aufweist, müssen die angrenzenden Kanten um jeweils $\frac{1}{2} \cdot$ Differenzbreitenwert verschoben werden, d.h. um ein Viertel des Betrags der Differenz der ersten Schätzung und der zweiten Schätzung, um die Vergrößerung bzw. Verkleinerung einer jeweiligen Balkenbreite bzw. Lückenbreite um den Differenzbreitenwert zu erreichen. Hierdurch wird insbesondere erreicht, dass die Abweichung einer jeweiligen Balkenbreite und/oder Lückenbreite von der Referenzbreite ihrer zugehörigen Breitenstufe minimiert wird. Die Kanten eines jeweiligen Balkens bzw. einer jeweiligen Lücke sind beispielsweise die an den jeweiligen Balken angrenzenden Kanten bzw. die an die jeweilige Lücke angrenzenden Kanten.

Gemäß einer Ausführungsform umfasst die Anpassung des Kantenfelds ferner eine zweite Anpassung, wobei die zweite Anpassung umfasst, dass:

(1) eine erste Schätzung der Referenzbreite der jeweiligen weiteren Breitenstufe auf Basis der Balkenbreitenwerte und eine zweite Schätzung der Referenzbreite der jeweiligen weiteren Breitenstufe auf Basis der Lückenbreitenwerte für jede weitere Breitenstufe der vordefinierten Anzahl von Breitenstufen gemäß dem Schätzungsverfahren nach einem der vorstehenden Ausführungsformen erfolgt,

(2) eine gemittelte geschätzte Referenzbreite für jede Breitenstufe basierend auf einer Mittelung der jeweiligen ersten Schätzung und der jeweiligen zweiten Schätzung bestimmt wird,

(3) über das Kantenfeld iteriert wird,

(4) wobei für jede Kante anhand der gemittelten geschätzten Referenzbreiten der Breitenstufen ermittelt wird, welcher Breitenstufe die beiden angrenzenden Barcodeelemente zugehörig sind,

(5) wobei für jede Kante ferner ermittelt wird, ob ein Verschiebung der Kante um einen vordefinierten Feinjustierungswert $\Delta x$ in eine der beiden Richtungen zu einer Verringerung des Abstands von beiden angrenzenden Elementen zu der gemittelten geschätzten Referenzbreite ihrer zugehörigen Breitenstufe führt, und bei einer positiven Ermittlung, eine Verschiebung der jeweiligen Kante um $\Delta x$ in die entsprechende Richtung erfolgt und der Schritt (5) für die verschobene Kante wiederholt wird,

(6) wobei bei einer negativen Ermittlung keine Verschiebung der jeweiligen Kante erfolgt und die vorstehenden Schritte (4) bis (6) für die nächste Kante durchgeführt werden.

Anders ausgedrückt, werden die erste Schätzung auf Basis der Balkenbreitenwerte und die zweite Schätzung auf Basis der Lückenbreitenwerte dazu genutzt, um eine endgültige Schätzung, welche einer Mittelung der beiden Schätzungen entspricht, zu bestimmen, welche der tatsächlichen Referenzbreite einer jeweiligen Breitenstufe im Idealfall am nächsten kommt. Somit ergibt sich für jede Breitenstufe eine jeweilige gemittelte geschätzte Referenzbreite. Auf Basis dieser gemittelten geschätzten Referenzbreiten kann dann für jede Kante entschieden werden, ob eine Verschiebung der Kantenposition um den Feinjustierungswert $\Delta x$ zu einer Reduzierung der Abweichung der Breite der angrenzenden Elemente, d.h. des angrenzenden Balkens und der angrenzenden Lücke, von der jeweiligen Referenzbreite führt. Der Feinjustierungswert $\Delta x$ kann insbesondere der Breite eines Pixels entsprechen. Um zu bestimmen, welcher Breitenstufe ein jeweiliger Balken oder eine jeweilige Lücke zuzuordnen ist, kann beispielsweise die Breite des jeweiligen Balkens bzw. der jeweiligen Lücke mit den gemittelten geschätzten Referenzbreiten der Breitenstufen verglichen werden, und die Breitenstufe als zugehörige Breitenstufe ausgewählt werden, dessen gemittelte geschätzte Referenzbreite den geringsten Abstand zur erfassten Breite des Barcodeelements aufweist. Die zweite Anpassung entspricht somit insbesondere einer Feinjustierung des Kantenfelds, während die erste Anpassung insbesondere einer groben Justierung des Kantenfelds entspricht. Vorzugsweise kann die zweite Anpassung nach der ersten Anpassung erfolgen. Die erste und zweite Anpassung können aber auch unabhängig voneinander angewandt werden, d.h. die Durchführung der ersten Anpassung ist keine notwendige Bedingung für die Durchführung der zweiten Anpassung oder umgekehrt.

Die erste und zweite Schätzung der Referenzbreite der jeweiligen weiteren Breitenstufe kann beispielsweise auf Basis der Gleichungen (4) und (5) erfolgen, wobei die Gleichungen (4) und (5) dann dahingehend angepasst sein können, dass sie mit dem Index $i=a+1$ beginnen, wobei a der Index ist, an dem die Schätzung der Referenzbreite einer vorherigen Breitenstufe beendet wurde. Beispielsweise kann eine erste Schätzung der Referenzbreite der zweiten Breitenstufe auf Basis der Balkenbreitenwerte basierend auf einer angepassten Gleichung (4) erfolgen:

$$b_{sum} = \sum_{i=x+1}^{w} b_i \qquad (6)$$

wobei $b_{sum}$ der Summe der Balkenbreitenhistogrammwerte für den (x+1)sten bis w-ten Breitenwert entspricht, $b_i$ dem Balkenbreitenhistogrammwert für den i-ten Breitenwert entspricht, i den Index des Breitenwerts angibt, und w den Index des Breitenwerts angibt, für den die Bedingung $b_{sum}$ > *erster Schwellenwert* erfüllt ist. x ist hierbei der Wert aus Gleichung (4), an dem die Schätzung der Referenzbreite der vorherigen, d.h. der ersten, Breitenstufe beendet wurde. In entsprechender Weise kann die zweite Schätzung der Referenzbreite der zweiten Breitenstufe auf Basis der Lückenbreitenwerte erfolgen, wobei in diesem Fall die Gleichung (5) herangezogen wird. In entsprechender Weise kann auch die erste und zweite Schätzung der Referenzbreite der weiteren Breitenstufen erfolgen.

Die Iteration über das Kantenfeld kann, wenn das Kantenfeld beispielsweise als ein Streifen ausgebildet ist, von einem Ende des Streifens zum anderen Ende, z.B. von links nach rechts oder von rechts nach links, erfolgen.

Durch die individuelle Anpassung der Kanten können lokale Fehler, insbesondere Anpassungsfehler, welche beispielsweise durch eine globale Anpassung der Kanten des Kantenfelds nicht behoben werden konnten oder durch die globale Anpassung erzeugt wurden, im Kantenfeld verbessert werden, um die Lesbarkeit weiter zu erhöhen. Auswertungen des adaptiven Verfahrens, bei denen eine globale Anpassung der Kanten des Kantenfelds, wie sie in einem der vorherigen Abschnitte beschrieben ist, in Kombination mit einer individuellen Anpassung erfolgt, haben zusätzlich gezeigt, dass die Wahrscheinlichkeit für Fehllesungen massiv sinkt. Beispielsweise konnte eine Reduzierung des Fehllesungen um 40% festgestellt werden.

Gemäß einer Ausführungsform wird die erste Schätzung der Referenzbreite der ersten Breitenstufe sowie die zweite Schätzung der Referenzbreite der ersten Breitenstufe unter Verwendung eines ersten Kantenfeldabschnitts bestimmt, wobei der erste Kantenfeldabschnitt einen ersten Teilabschnitt des Kantenfelds umfasst, wobei weitere erste Schätzungen der Referenzbreite der ersten Breitenstufe sowie weitere zweite Schätzungen der Referenzbreite der ersten Breitenstufe unter Verwendung jeweiliger weiterer Kantenfeldabschnitte bestimmt werden, wobei der erste Kantenfeldabschnitt unter Verwendung der ersten und zweiten Schätzung angepasst wird und ein jeweiliger weiterer Kantenfeldabschnitt unter Verwendung der jeweiligen weiteren ersten Schätzung und der jeweiligen weiteren zweiten Schätzung angepasst wird. Hierdurch kann beispielsweise die Lesbarkeit von Barcodes, die perspektivisch verzerrt oder gekrümmt aufgenommen wurden, verbessert werden. Die Verzerrungen und Krümmungen führen beispielsweise zu unterschiedlichen ersten und zweiten Schätzungen in den unterschiedlichen Kantenfeldabschnitten, was durch das vorstehend beschrieben Verfahren berücksichtigt werden kann. Ferner kann überprüft werden, ob die jeweiligen weiteren ersten bzw. weiteren zweiten Schätzungen und die erste bzw. zweite Schätzung voneinander um einen vorgegebenen Schwellenwert abweichen, bevor eine spezifische Anpassung für jeden Kantenfeldabschnitt erfolgt. Mit anderen Worten kann festgestellt werden, ob signifikante Änderungen der Messwerte, d.h. der Breitenwerte der Balken bzw. Lücken, entlang des Kantenfelds und insbesondere zwischen den Kantenfeldabschnitten vorliegen, und nur bei einer entsprechenden positiven Feststellung das vorstehende Verfahren angewandt werden.

Gemäß einer Ausführungsform wird ein finaler Ähnlichkeitswert gemäß einem der Ähnlichkeitsermittlungsverfahren nach einem der vorstehenden Ausführungsformen für das angepasste Kantenfeld ermittelt, wobei eine Weiterverarbeitung auf Basis des angepassten Kantenfelds erfolgt, wenn der finale Ähnlichkeitswert größer als ein vorbestimmter finaler Ähnlichkeitsschwellenwert ist und/oder wenn der finale Ähnlichkeitswert höher als der Ähnlichkeitswert ist. Somit wird nach erfolgter Anpassung des Kantenfeld eine finale Überprüfung durchgeführt, um festzustellen, ob die implementierten Änderungen zu einem verbesserten Ergebnis im Hinblick auf die Verteilung der Balkenbreitenwerte und der Lückenbreitenwerte geführt hat, d.h. ob die Balkenbreitenwerte und Lückenbreitenwerte zumindest im Durchschnitt näher an ihrer jeweiligen Referenzbreite liegen. Der vorbestimmte finale Ähnlichkeitsschwellenwert ist beispielsweise gleich dem vorbestimmten Ähnlichkeitsschwellenwert. Der vorbestimmte finale Ähnlichkeitsschwellenwert kann sich aber auch von dem vorbestimmten Ähnlichkeitsschwellenwert unterscheiden. Beispielsweise können höhere Anforderungen an den finalen Ähnlichkeitsschwellenwert gestellt werden, sodass dieser höher ist. Zusätzlich oder alternativ kann der finale Ähnlichkeitswert mit dem Ähnlichkeitswert verglichen werden, wobei eine Weiterverarbeitung auf Basis des angepassten Kantenfelds erfolgt, wenn der finale Ähnlichkeitswert höher als der Ähnlichkeitswert ist.

Ein weiterer Aspekt der Erfindung bezieht sich auf ein Verfahren zum Lesen von Barcodes, welches umfasst, dass:

mittels einer Bilderfassungsvorrichtung ein Barcode erfasst wird, auf welchem Balken und zwischen den Balken angeordnete Lücken alternierend angeordnet sind, wobei die Breite einer jeweiligen Lücke und/oder die Breite eines jeweiligen Balkens einer Referenzbreite einer jeweiligen Breitenstufe einer vordefinierten Anzahl von Breitenstufen entspricht,
ein Kantenfeld basierend auf dem erfassten Barcode erzeugt wird, wobei eine Kante im Kantenfeld einen Balken-Lücken-Übergang angibt,

unter Verwendung des Kantenfelds zumindest eine erste Schätzung einer Referenzbreite einer ersten Breitenstufe auf Basis der Balkenbreitenwerte erfolgt und eine zweite Schätzung der Referenzbreite der ersten Breitenstufe auf Basis der Lückenbreitenwerte erfolgt,

basierend auf einer Differenz der ersten Schätzung und der zweiten Schätzung ein Verschiebungswert ermittelt wird, und

basierend auf dem Verschiebungswert das Kantenfeld angepasst wird,

wobei der Barcode basierend auf dem angepassten Kantenfeld dekodiert wird.

Ein weiterer Aspekt der Erfindung bezieht sich auf Verfahren zum Lesen von Barcodes, welches umfasst, dass,

mittels einer Bilderfassungsvorrichtung ein Barcode erfasst wird, welcher Barcodeelemente in Form von Balken und Lücken umfasst, wobei die Balken und die zwischen den Balken angeordneten Lücken alternierend angeordnet sind, wobei die Breite einer jeweiligen Lücke und/oder die Breite eines jeweiligen Balkens einer Referenzbreite einer jeweiligen Breitenstufe einer vordefinierten Anzahl von Breitenstufen entspricht;

ein Kantenfeld basierend auf dem erfassten Barcode erzeugt wird, wobei eine Kante im Kantenfeld einen Balken-Lücken-Übergang angibt;

wobei eine Anpassung des Kantenfelds erfolgt, welche umfasst, dass:

(1) eine erste Schätzung der Referenzbreite der jeweiligen Breitenstufe auf Basis der Balkenbreitenwerte und eine zweite Schätzung der Referenzbreite der jeweiligen Breitenstufe auf Basis der Lückenbreitenwerte für jede Breitenstufe der vordefinierten Anzahl von Breitenstufen erfolgt,

(2) eine gemittelte geschätzte Referenzbreite für jede Breitenstufe basierend auf einer Mittelung der jeweiligen ersten Schätzung und der jeweiligen zweiten Schätzung bestimmt wird,

(3) über das Kantenfeld iteriert wird,

(4) wobei für jede Kante anhand der gemittelten geschätzten Referenzbreiten der Breitenstufen ermittelt wird, welcher Breitenstufe die beiden angrenzenden Barcodeelemente zugehörig sind,

(5) wobei für jede Kante ferner ermittelt wird, ob ein Verschiebung der Kante um einen vordefinierten Fein-justierungswert $\Delta x$ in eine der beiden Richtungen zu einer Verringerung des Abstands von beiden angrenzenden Elementen zu der gemittelten geschätzten Referenzbreite ihrer zugehörigen Breitenstufe führt, und bei einer positiven Ermittlung, eine Verschiebung der jeweiligen Kante um $\Delta x$ in die entsprechende Richtung erfolgt und der Schritt (5) für die verschobene Kante wiederholt wird,

(6) wobei bei einer negativen Ermittlung keine Verschiebung der jeweiligen Kante erfolgt und die vorstehenden Schritte (4) bis (6) für die nächste Kante durchgeführt werden;

wobei der Barcode basierend auf dem angepassten Kantenfeld dekodiert wird.

Es ist zu beachten, dass für die vorstehenden Ausführungen für alle der hierin beschriebenen erfindungsgemäßen Verfahren gelten, dies gilt insbesondere hinsichtlich Vorteilen und Ausführungsformen.

Ein weiterer Aspekt der Erfindung betrifft eine Codelesevorrichtung mit einer Bilderfassungsvorrichtung zum Erfassen eines Barcodes und mit einer Steuer- und Auswertungseinheit, in der ein Verfahren zum Lesen eines Barcodes nach einem der vorhergehenden Ausführungen implementiert ist.

Die Bilderfassungsvorrichtung ist beispielsweise ein Barcodescanner, eine Kamera oder ein anderer geeigneter Bildsensor. Die Steuer- und Auswertungseinheit ist vorzugsweise Teil der Codelesevorrichtung selbst und insbesondere in deren Gehäuse untergebracht. Denkbar ist aber auch eine mindestens teilweise externe Steuer- und Auswertungseinheit. Die Steuer- und Auswertungseinheit ist beispielsweise ein Mikrocontroller, ein Computer oder eine andere Recheneinheit. Die Steuer- und Auswertungseinheit umfasst insbesondere einen Speicher sowie einen Prozessor.

Für die Codelesevorrichtung gelten die Ausführungen zu dem erfindungsgemäßen Verfahren entsprechend, dies gilt insbesondere hinsichtlich Vorteilen und Ausführungsformen.

Nachfolgend wird die Erfindung rein beispielhaft unter Bezugnahme auf die Zeichnungen dargestellt. Es zeigen:

Fig. 1    ein Ablaufdiagramm eines Verfahrens zum Lesen von Barcodes

Fig. 2    ein Ablaufdiagramm eines ersten Verfahrens zum Anpassen eines Kantenfelds

Fig. 3    ein Ablaufdiagramm eines zweiten Verfahrens zum Anpassen eines Kantenfelds

Fig. 4    einen Grauwertscan eines Barcodes sowie ein entsprechendes Kantenfeld und weitere angepasste Kantenfeldvarianten

Fig. 5    ein Balkenbreitenhistogramm und ein Lückenbreitenhistogramm für das Kantenfeld von Fig. 4

Fig. 6    einen Grauwertscan eines Barcodes sowie ein entsprechendes Kantenfeld und ein angepasstes Kantenfeld nach einer Anpassung gemäß einer Ausführungsform der Erfindung

Fig. 7    ein Balkenbreitenhistogramm und ein Lückenbreitenhistogramm für das angepasste Kantenfeld von Fig. 6

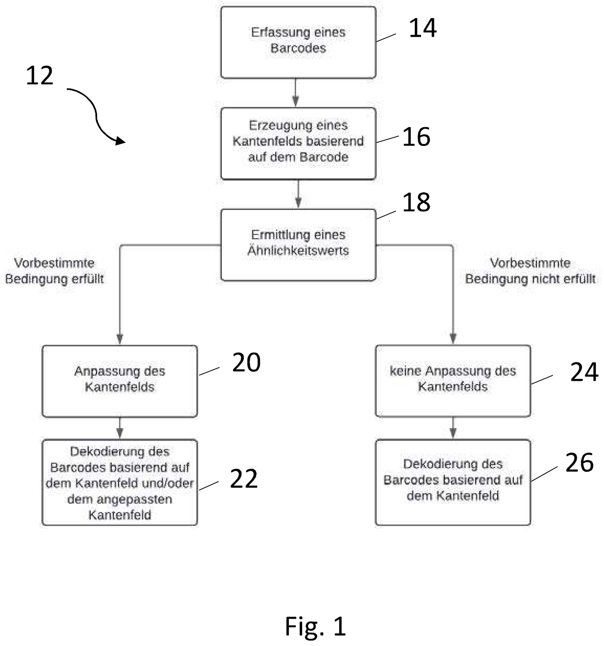

Fig. 1 veranschaulicht ein Ablaufdiagramm eines Verfahrens 12 zum Lesen von Barcodes. In einem ersten Verfahrensschritt 14 wird mittels einer Bilderfassungsvorrichtung ein Barcode erfasst, welcher Barcodeelemente in Form von Balken 46 und Lücken 48 umfasst, wobei die Balken 46 und die zwischen den Balken angeordneten Lücken 48 alternierend angeordnet sind, wobei ein jeweiliger Balken 46 und/oder eine jeweilige Lücke 48 einer Breitenstufe einer vordefinierten Anzahl von Breitenstufen zuordenbar ist, wobei jede Breitenstufe eine jeweilige Referenzbreite aufweist. Ferner wird in einem nächsten Verfahrensschritt 16 ein Kantenfeld 44 basierend auf dem erfassten Barcode erzeugt, wobei eine Kante 50 im Kantenfeld 44 einen Balken-Lücken-Übergang angibt. Unter Verwendung des Kantenfelds 44 wird anschließend in einem Verfahrensschritt 18 ein Ähnlichkeitswert ermittelt, welcher eine Ähnlichkeit zwischen einer Verteilung von Balkenbreitenwerten und einer Verteilung von Lückenbreitenwerten angibt. Wenn der Ähnlichkeitswert eine vorbestimmte Bedingung erfüllt, erfolgt in einem weiteren Verfahrensschritt 20 eine Anpassung des Kantenfelds 44 und der Barcode wird in einem Verfahrensschritt 22 basierend auf dem Kantenfeld 44 und/oder dem angepassten Kantenfeld 54 dekodiert. Wenn der Ähnlichkeitswert die vorbestimmte Bedingung nicht erfüllt, so wird das Kantenfeld 44 gemäß Schritt 24 nicht angepasst und der Barcode wird in Schritt 26 basierend auf dem Kantenfeld 44, d.h. dem ursprünglich erzeugten Kantenfeld 44, dekodiert.

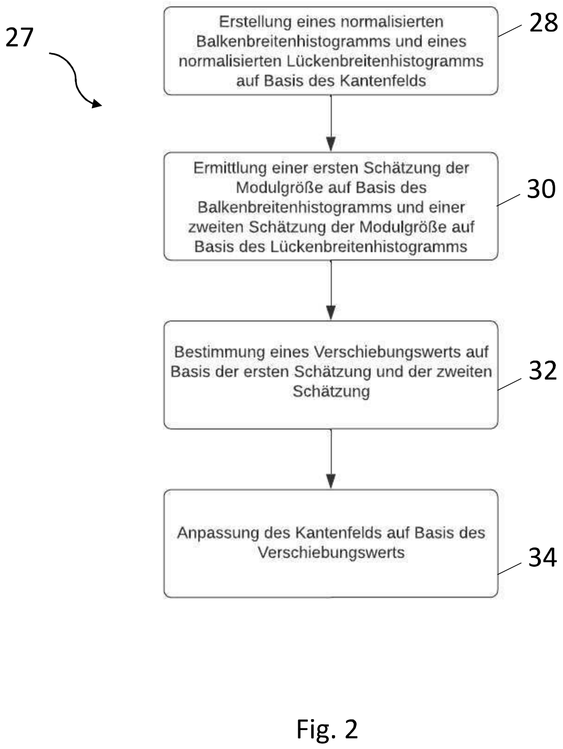

Fig. 2 veranschaulicht ein erstes Verfahren 27 zum Anpassen eines Kantenfelds 44 gemäß einer Ausführungsform der Erfindung. Dabei wird in einem ersten Schritt 28 ein normalisiertes Balkenbreitenhistogramm und eine normalisiertes Lückenbreitenhistogramm erstellt. Das Balkenbreitenhistogramm und das Lückenbreitenhistogramm werden anhand des Kantenfelds 44 erstellt. Dabei gibt ein Histogrammwert eine relative Häufigkeit eines Balkenbreitenwerts bzw. eines Lückenbreitenwerts an. Anschließend erfolgt in Schritt 30 eine erste Schätzung der Modulgröße, d.h. der Referenzbreite der kleinsten Breitenstufe, auf Basis des Balkenbreitenhistogramms und eine zweite Schätzung der Modulgröße auf Basis des Lückenbreitenhistogramms.

Die erste bzw. zweite Schätzung kann auf zwei unterschiedliche Weisen ermittelt werden. Hierbei werden beginnend mit dem Histogrammwert des kleinsten messbaren Breitenwerts, d.h. Balkenbreitenwerts bzw. Lückenbreitenwerts, die Histogrammwerte, d.h. die relative Häufigkeit der Breitenwerte, iterativ aufaddiert bis der aufaddierte Histogrammwert einen Schwellenwert von 0,2 überschreitet, d.h. bis 20% der Balkenbreitenwerte bzw. der Lückenbreitenwerte berücksichtigt wurden. Anschließend kann der Balkenbreitenwert bzw. Lückenbreitenwert als die erste bzw. zweite Schätzung festgelegt werden, ab welchem diese Bedingung erfüllt ist. Eine andere Möglichkeit besteht darin, eine gewichtete erste bzw. zweite Schätzung zu ermitteln, indem basierend auf der relativen Häufigkeit der Balkenbreitenwerte bzw. der Lückenbreitenwerte, welche bis zur vorstehend genannten Überschreitung des Schwellenwerts berücksichtigt wurden, eine Gewichtung der Balkenbreitenwerte bzw. der Lückenbreitenwerte vorgenommen wird. Unter Verwendung der gewichteten Balkenbreitenwerte bzw. Lückenbreitenwerte kann dann ein Mittelwert ermittelt werden, welcher eine gewichtete Schätzung der Modulgröße für die Balken 46 bzw. Lücken 48 repräsentiert.

In einem nächsten Schritt 32 kann ein Verschiebungswert auf Basis der ersten Schätzung und der zweiten Schätzung bestimmt werden. Der Verschiebungswert beträgt dabei ein Viertel des Betrags der Differenz zwischen der ersten Schätzung der Modulgröße und der zweiten Schätzung der Modulgröße (Schätzungsdifferenz). Hierdurch wird erreicht, dass eine Verschiebung der Kanten 50 des Kantenfelds 44 dazu führt, dass sich die Breite eines Balkens 46 bzw. einer Lücke 48 ihrer zugehörigen Referenzbreite annähert. Im letzten Schritt 34 werden die Kanten 50 des Kantenfelds 44 mittels des Verschiebungswerts angepasst bzw. verschoben. Wenn die erste Schätzung kleiner als die zweite Schätzung ist, werden die an einen jeweiligen Balken 46 angrenzenden Kanten 50 um den Verschiebungswert in entgegengesetzte, insbesondere divergierende, Richtungen, derart verschoben werden, dass die Breite des jeweiligen Balkens 46 um die Hälfte des Betrags der Schätzungsdifferenz vergrößert wird, und die an eine jeweilige Lücke 48 angrenzenden Kanten 50 um den Verschiebungswert in entgegengesetzte, insbesondere konvergierende, Richtungen, derart verschoben werden, dass die Breite der jeweiligen Lücke 48 um die Hälfte des Betrags der Schätzungsdifferenz verkleinert wird. Ferner werden, wenn die erste Schätzung größer als die zweite Schätzung ist, die an einen jeweiligen Balken 46 angrenzenden Kanten 50 um den Verschiebungswert in entgegengesetzte, konvergierende Richtungen, derart verschoben werden, dass die Breite des jeweiligen Balkens 46 um die Hälfte des Betrags der Schätzungsdifferenz verkleinert wird, und die an eine jeweilige Lücke 48 angrenzenden Kanten 50 um den Verschiebungswert, insbesondere in entgegengesetzte, konvergierende Richtungen, derart verschoben werden, dass die Breite der jeweiligen Lücke 48 um die Hälfte des Betrags der Schätzungsdifferenz verkleinert wird. Das angepasste Kantenfeld weist insbesondere eine verbesserte Ähnlichkeit zwischen einer Verteilung von Balkenbreitenwerten und einer Verteilung von Lückenbreitenwerten auf.

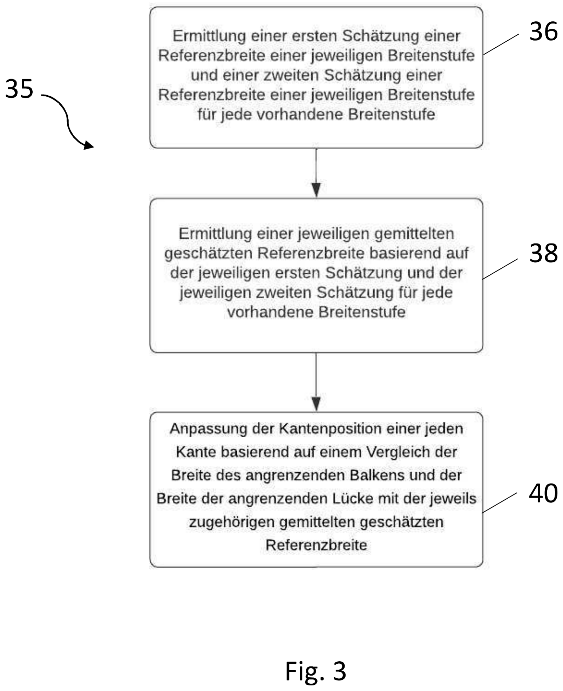

Fig. 3 veranschaulicht ein zweites Verfahren 35 zum Anpassen eines Kantenfelds 44 gemäß einer Ausführungsform der Erfindung. In Schritt 36 erfolgt eine Ermittlung einer ersten Schätzung einer Referenzbreite einer jeweiligen Breitenstufe und einer zweiten Schätzung einer Referenzbreite einer jeweiligen Breitenstufe für jede vorhandene Breitenstufe. Die erste und zweite Schätzung der Referenzbreite der ersten Breitenstufe, d.h. der Modulgröße, kann entsprechend der Beschreibung zu Fig. 2 erfolgen. Für die zweite und die weiteren Breitenstufen kann das vorstehend beschriebene Verfahren dahingehend angepasst werden, dass die Histogrammsumme für den Breitenwerte mit dem Index i=a+1 beginnt, wobei a der Index ist, an dem die Schätzung der Referenzbreite einer vorherigen Breitenstufe beendet wurde. In Schritt 38 erfolgt für jede vorhandene Breitenstufe eine Ermittlung einer jeweiligen gemittelten geschätzten Referenzbreite basierend auf der jeweiligen ersten Schätzung und der jeweiligen zweiten Schätzung. Die jeweilige gemittelte geschätzte Referenzbreite stellt somit eine endgültige Schätzung der Referenzbreite einer jeweiligen Breitenstufe dar, welche als Vergleichsgröße verwendet werden kann, um festzustellen, wie stark ein Balken 46 bzw. eine Lücke 48 von der Referenzbreite der zugehörigen Breitenstufe abweicht. In einem Schritt 40 kann dementsprechend eine Anpassung der Kantenposition einer jeden Kante 50 basierend auf einem Vergleich der Breite des an die Kante 50 angrenzenden Balkens 46 und der Breite der an die Kante 50 angrenzenden Lücke 48 mit der jeweils zugehörigen Referenzbreite vorgenommen werden. Dabei wird für jede Kante 50 anhand der gemittelten geschätzten Referenzbreiten der Breitenstufen ermittelt, welcher Breitenstufe die beiden angrenzenden Barcodeelemente 46, 48, d.h. der angrenzende Balken 46 und die angrenzende Lücke 48, zugehörig sind. Für jede Kante 50 wird ferner ermittelt, ob eine Verschiebung der Kante 50 um einen vordefinierten Feinjustierungswert $\Delta x$ in eine der beiden Richtungen, d.h. in eine positive X-Richtung oder in eine negative X-Richtung, zu einer Verringerung des Abstands von beiden angrenzenden Barcodeelementen 46, 48 zu der gemittelten geschätzten Referenzbreite ihrer zugehörigen Breitenstufe führt, wobei bei einer positiven Ermittlung eine Verschiebung der jeweiligen Kante 50 um $\Delta x$ in die entsprechende Richtung erfolgt und die vorstehenden Schritte für die nächste Kante 50 durchgeführt werden. Bei einer negativen Ermittlung erfolgt keine Verschiebung der jeweiligen Kante 50 und es wird zur nächsten Kante 50 übergegangen.

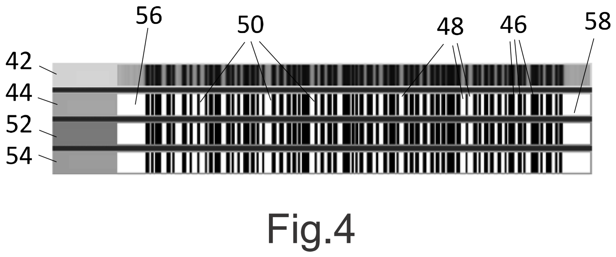

Fig. 4 zeigt einen Grauwertscan 42 eines Barcodes sowie ein entsprechendes Kantenfeld 44 und weitere angepasste Kantenfeldvarianten 52, 54. Der Grauwertscan wird beispielsweise von einer Bilderfassungsvorrichtung erzeugt, welche den Barcode als Grauwertscan 42 erfasst. Im vorliegenden Fall liegt eine Überdrucksituation vor, wie aus dem Grauwertscan 42 oder dem Kantenfeld 44 ersichtlich ist, d.h. die Breiten der Balken 46 sind deutlich breiter als die der Lücken 48. Nach einer Binarisierung des Grauwertscans 42 entsteht das Kantenfeld 44, wobei die Kanten 50 des Kantenfeld 44 einen Schwarz-Weiß-Übergang anzeigen. Wie zu erkennen ist, zeigt das Kantenfeld 44 die Balken 46 des Barcodes in schwarz und die Lücken 48 des Barcodes in weiß an. Die Balken 46 und Lücken 48 sind dabei alternierend entlang eines geraden Streifens angeordnet. An einem Ende des Streifens ist dabei ein Startelement 56 in Form eines weißen Rechtecks und an dem anderen Ende ein Endelement 58 in Form eines weißen Rechtecks angeordnet, wobei das Start- und Endelement 56, 58 einen im Vergleich zu den Balken 46 und Lücken 48 signifikant größeren Breitenwert aufweisen, anhand dessen ein Start bzw. Ende des zu lesenden Barcodes festgestellt werden kann. Die beiden angepassten Kantenfeldvariationen 52, 54 sind gemäß einem Jittering-Verfahren nach dem Stand der Technik erzeugt worden. In der ersten angepassten Kantenfeldvariante 52 sind die Balken 46 um einen vordefinierten Wert verbreitert und die Lücken 48 entsprechend verschmälert worden, während in der zweiten angepassten Kantenfeldvariante 54 die Lücken 48 um einen vordefinierten Wert verbreitert und die Balken 46 entsprechend verschmälert worden sind. Es ist zu erkennen, dass in der zweiten angepassten Kantenfeldvariante 54 die Lücken 48 zwar verbreitert worden sind, jedoch weiterhin die Breite der Lücken 48 im Vergleich zu der Breite der Balken 46 deutlich schmaler sind. Die erste angepasste Kantenfeldvariante 52 sorgt hingegen sogar für eine Verschlechterung der Verhältnisse zwischen Lücken- und Balkenbreiten im Vergleich zum Originalkantenfeld 44 und verstärkt somit den Überdruckeffekt.

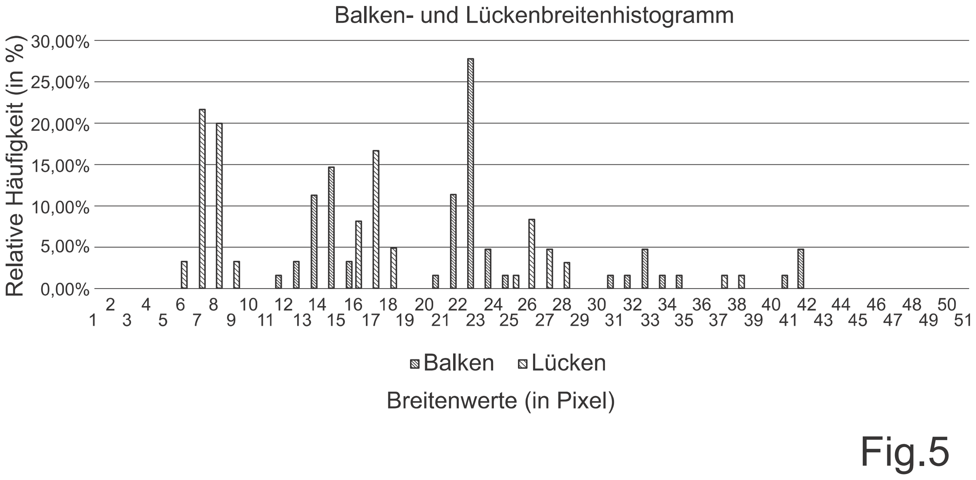

In Fig. 5 ist ein Balkenbreitenhistogramm und ein Lückenbreitenhistogramm des Kantenfelds 44 von Fig. 4 dargestellt. Auf der Y-Achse ist dabei die relative Häufigkeit eines Breitenwerts (in %) und auf der X-Achse ein jeweiliger Breitenwert (in Pixel) angegeben.

Es ist erkennbar, dass die Verteilung der Balkenbreitenwerte und der Lückenbreitenwerte stark voneinander abweichen. Der Überdruck führt beispielsweise dazu, dass die Breitenwerte der Balken 46 tendenziell größer sind als die Breitenwerte der Lücken 48. Insbesondere gibt es kaum Überschneidungen zwischen der relativen Häufigkeit von Balkenbreitenwerten und Lückenbreitenwerten. So sind die einzigen Breitenwerte, für welche sowohl Lücken 48 als auch Balken 46 existieren, die Breitenwerte 16 und 25. Dies deutet auf eine geringe Ähnlichkeit zwischen der Verteilung der Balkenbreitenwerte und der Verteilung Lückenbreitenwerte hin. Dies Unähnlichkeit ist auch der Fig. 5 zu entnehmen. Ferner ist sowohl anhand des Balkenbreitenhistogramms als auch anhand des Lückenbreitenhistogramms erkennbar, dass für den vorliegenden Barcode vier Breitenstufen vorgesehen sind. Dies ist beispielsweise anhand der Verdichtung der Säulen in einem Breitenwertbereich erkennbar. Aus dem Graphen geht jedoch auch hervor, dass die jeweiligen einer Breitenstufe zugehörigen Breitenwerte, d.h. der Breitenwerte, welche sich um einen jeweiligen Breitenwertbereich ansammeln, für Balken 46 und Lücken 48 stark voneinander abweichen. So sind beispielsweise die einer ersten Breitenstufe, d.h. der Modulgröße, zugehörigen Breitenwerte für die Lücken 48 im Breitenwertbereich 6 bis 9 verteilt, während die der ersten Breitenstufe zugehörigen Breitenwerte für die Balken 46 im Breitenwertbereich 12 bis 15 verteilt sind.

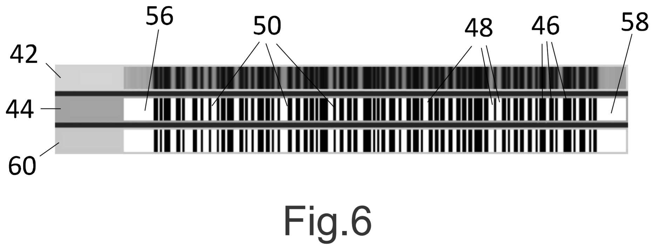

Fig. 6 zeigt den Grauwertscan 42 des Barcodes sowie das entsprechende Kantenfeld 44, wie es bereits in Fig. 4 gezeigt ist, und ein adaptiv angepasstes Kantenfeld 60 nach einer Anpassung gemäß einer Ausführungsform der Erfindung. Das adaptiv angepasste Kantenfeld 60 ist dabei das Resultat einer ersten, insbesondere groben, Anpassung gemäß dem in Fig. 2 dargestellten Verfahren sowie einer zweiten, insbesondere feinen, Anpassung gemäß dem in Fig. 3 dargestellten Verfahren. Wie aus dem adaptiv angepassten Kantenfeld 60 ersichtlich, sind die Breiten der Balken 46 und der Lücken 48 deutlich ähnlicher als in den angepassten Kantenfeldvarianten 52, 54, welche gemäß dem Jittering-Verfahren des Stands der Technik angepasst wurden. Ferner wurde im Vergleich zum Stand der Technik und der Fig. 4 nur eine angepasste Kantenfeldvariante erstellt, wodurch die Dekodierlast erheblich reduziert wird.

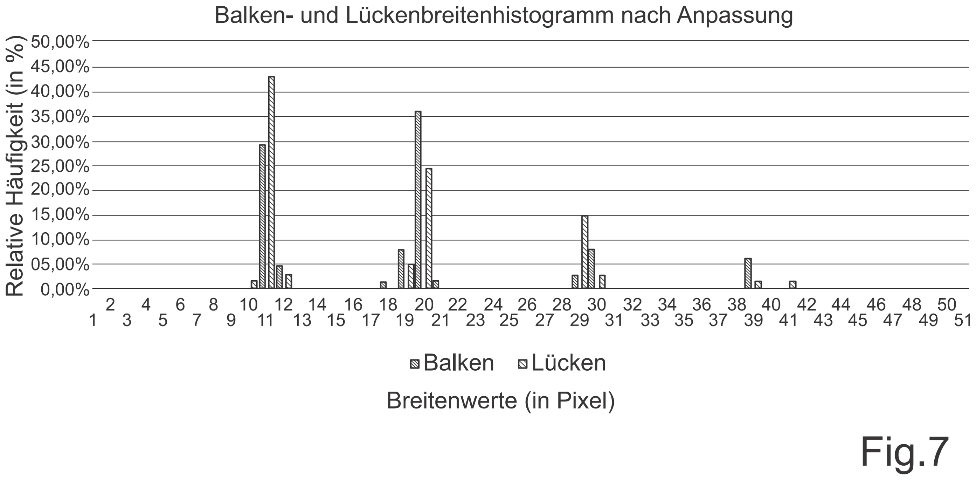

Fig. 7 veranschaulicht ein Balkenbreitenhistogramm und ein Lückenbreitenhistogramm für das adaptiv angepasste Kantenfeld 60 von Fig. 6. Wie in Fig. 7 erkennbar, sind die einer Breitenstufe zugehörigen Breitenwerte sowohl für das Balkenbreitenhistogramm als auch für das Lückenbreitenhistogramm um den nahezu identischen oder zumindest einen stark überschneidenden Breitenwertbereich verdichtet. So sind die der ersten Breitenstufe zugehörigen Breitenwerte für beide Histogramme um den Breitenwertbereich 10 bis 12 verteilt, die der zweiten Breitenstufe zugehörigen Breitenwerte um den Breitenwertbereich 18 bis 21 verteilt, die der dritten Breitenstufe zugehörigen Breitenwerte um den Breitenwertbereich 29 bis 30 verteilt und die der vierten Breitenstufe zugehörigen Breitenwerte um den Breitenwertbereich 39 bis 41 verteilt. Dies hat zur Folge, dass der Ähnlichkeitswert, der die Ähnlichkeit zwischen den beiden Verteilungen angibt, größer wird und beispielsweise größer als ein vorgegebener Ähnlichkeitsschwellenwert ist, sodass die Anpassung des Kantenfelds zu einem verbesserten Leseergebnis des Barcodes führt.

**Bezugszeichenliste**

| | |
|---|---|
| 12 | Verfahren zum Lesen von Barcodes |
| 14-24 | Verfahrensschritte |
| 27 | erstes Verfahren zum Anpassen eines Katenfelds |
| 28-34 | Verfahrensschritte |
| 35 | zweites Verfahren zum Anpassen eines Kantenfelds |
| 36-40 | Verfahrensschritte |
| 42 | Grauwertscan |
| 44 | Kantenfeld |
| 46 | Balken |
| 48 | Lücken |
| 50 | Kanten |
| 52 | erste angepasste Kantenfeldvariante |
| 54 | zweite angepasste Kantenfeldvariante |
| 56 | Startelement |
| 58 | Endelement |
| 60 | adaptiv angepasstes Kantenfeld |

**Patentansprüche**

1. Verfahren (12) zum Lesen von Barcodes, welches umfasst, dass:

mittels einer Bilderfassungsvorrichtung ein Barcode erfasst wird, welcher Barcodeelemente in Form von Balken (46) und Lücken (48) umfasst, wobei die Balken (46) und die zwischen den Balken (46) angeordneten Lücken (48) alternierend angeordnet sind, wobei ein jeweiliger Balken (46) und/oder eine jeweilige Lücke (48) einer Breitenstufe einer vordefinierten Anzahl von Breitenstufen zuordenbar ist, wobei jede Breitenstufe eine jeweilige Referenzbreite aufweist,
ein Kantenfeld (44) basierend auf dem erfassten Barcode erzeugt wird, wobei eine Kante (50) im Kantenfeld (44) einen Balken-Lücken-Übergang angibt,
unter Verwendung des Kantenfelds (44) ein Ähnlichkeitswert ermittelt wird, welcher eine Ähnlichkeit zwischen einer Verteilung von Balkenbreitenwerten und einer Verteilung von Lückenbreitenwerten angibt,
wobei eine Anpassung des Kantenfelds (44) erfolgt, wenn der Ähnlichkeitswert eine vorbestimmte Bedingung erfüllt, und
der Barcode basierend auf dem Kantenfeld (44) und/oder dem angepassten Kantenfeld dekodiert wird.

**2.** Verfahren (12) nach Anspruch 1,

wobei die Verteilung der Balkenbreitenwerte anhand eines normalisierten Balkenbreitenhistogramms und die Verteilung der Lückenbreitenwerte anhand eines normalisierten Lückenbreitenhistogramms ermittelt wird, wobei der Ähnlichkeitswert $z_{sim}$ basierend auf folgender Gleichung ermittelt wird:

$$z_{sim,1} = 1 - \sum_i \frac{(b_i - l_i)^2}{2*(b_i - l_i)}$$

wobei $b_i$ den Histogrammwert des Balkenbreitenhistogramms für den i-ten Breitenwert und $l_i$ den Histogrammwert des Lückenbreitenhistogramms für den i-ten Breitenwert angibt, wobei eine Anpassung des Kantenfelds (44) erfolgt, wenn der Ähnlichkeitswert kleiner als ein vorbestimmter Ähnlichkeitsschwellenwert ist.

**3.** Verfahren (12) nach Anspruch 1,

wobei die Verteilung der Balkenbreitenwerte anhand eines normalisierten Balkenbreitenhistogramms und die Verteilung der Lückenbreitenwerte anhand eines normalisierten Lückenbreitenhistogramms ermittelt wird, wobei eine erste Schätzung $z_1$ einer Referenzbreite einer ersten Breitenstufe auf Basis der Balkenbreitenwerte und eine zweite Schätzung $z_2$ der Referenzbreite der ersten Breitenstufe auf Basis der Lückenbreitenwerte erfolgt, wobei der Ähnlichkeitswert $z_{sim,2}$ basierend auf einer Differenz zwischen der ersten Schätzung $z_1$ und der zweiten Schätzung $z_2$ ermittelt wird.

**4.** Verfahren (12) nach Anspruch 3,

wobei die erste Schätzung $z_1$ unter Verwendung des normalisierten Balkenbreitenhistogramms erfolgt, wobei die Histogrammwerte des Balkenbreitenhistogramms gemäß der folgenden Gleichung aufaddiert werden:

$$b_{sum} = \sum_{i=1}^{x} b_i$$

wobei $b_{sum}$ der Summe der Balkenbreitenhistogrammwerte für den ersten bis x-ten Breitenwert entspricht, $b_i$ dem Balkenbreitenhistogrammwert für den i-ten Breitenwert entspricht, i den Index des Breitenwerts angibt, und x den Index des Breitenwerts angibt, für den die Bedingung $b_{sum}$ > *erster Schwellenwert* erfüllt ist, wobei der x-te Breitenwert als erste Schätzung $z_1$ festgelegt wird oder die erste Schätzung $z_1$ als gewichteter Balkenbreitenwert gemäß der Gleichung

$$z_1 = \sum_{i=1}^{x} \frac{b_i}{b_{sum}} \cdot B(i)$$

berechnet wird, wobei $B(i)$ den i-ten Breitenwert angibt, wobei die zweite Schätzung $z_2$ unter Verwendung des normalisierten Lückenbreitenhistogramms erfolgt, wobei die Histogrammwerte des Lückenbreitenhistogramms gemäß der folgenden Gleichung aufaddiert werden:

$$l_{sum} = \sum_{i=1}^{y} l_i$$

wobei $l_{sum}$ der Summe der Lückenbreitenhistogrammwerte für den ersten bis x-ten Breitenwert entspricht, $l_i$ dem Lückenbreitenhistogrammwert für den i-ten Breitenwert entspricht, i den Index des Breitenwerts angibt, und y den Index des Breitenwerts angibt, für den die Bedingung $l_{sum}$ > *zweiter Schwellenwert* erfüllt ist, wobei der y-te Breitenwert als zweite Schätzung $z_2$ festgelegt wird oder die zweite Schätzung $z_2$ als gewichteter

$$z_2 = \sum_{i=1}^{y} \frac{l_i}{l_{sum}} \cdot B(i)$$

Lückenbreitenwert gemäß der Gleichung berechnet wird, wobei $B(i)$ den i-ten Breitenwert angibt.

**5.** Verfahren (12) nach Anspruch 1,

wobei das Kantenfeld (44) eine Vielzahl von Pixeln umfasst, wobei die einem Balken (46) zugehörigen Pixel eine erste Pixelfarbe aufweisen und die einer Lücke (48) zugehörigen Pixel eine zweite Pixelfarbe aufweisen, welche sich von der ersten Pixelfarbe unterscheidet, wobei der Ähnlichkeitswert einem Verhältnis von Pixeln mit einer ersten Pixelfarbe und Pixeln mit einer zweiten Pixelfarbe entspricht,
wobei eine Anpassung des Kantenfelds (44) erfolgt, wenn der Ähnlichkeitswert größer als ein vorbestimmter erster Ähnlichkeitsschwellenwert oder kleiner als ein zweiter Ähnlichkeitsschwellenwert ist.

**6.** Verfahren (12) nach einem der vorstehenden Ansprüche,
wobei der Ähnlichkeitswert unter Verwendung einer KI erzeugt wird, wobei die Trainingsdaten der KI eine Vielzahl von Beispielkantenfeldern und zugehörigen Labeln umfasst, wobei das Label eines zugehörigen Beispielkantenfelds eine Ähnlichkeit zwischen einer Verteilung von Balkenbreitenwerten des zugehörigen Beispielkantenfelds und einer Verteilung von Lückenbreitenwerten des zugehörigen Beispielkantenfelds angibt.

**7.** Verfahren (12) nach einem der Ansprüche 3 bis 6,
wobei die Anpassung des Kantenfelds (44) umfasst, dass:

basierend auf einer Schätzungsdifferenz, die einer Differenz der ersten Schätzung und der zweiten Schätzung entspricht, ein Verschiebungswert ermittelt wird, und
basierend auf dem Verschiebungswert das Kantenfeld (44) angepasst wird.

**8.** Verfahren (12) nach Anspruch 7,

(1) wobei basierend auf der Schätzungsdifferenz ein Histogrammverschiebungswert ermittelt wird,
(2) wobei das Balkenbreitenhistogramm und/oder das Lückenbreitenhistogramm um den Histogrammverschiebungswert verschoben werden,
(3) wobei ein weiterer Ähnlichkeitswert gemäß einem der Verfahren nach Anspruch 2 oder 3 für das verschobene Balkenbreiten-histogramm und das Lückenbreitenhistogramm, für das verschobene Lückenbreitenhistogramm und das Balkenbreitenhistogramm oder für das verschobene Balkenbreitenhistogramm und das verschobene Lückenbreitenhistogramm ermittelt wird,
(4) wobei eine Anpassung des Kantenfelds (44) basierend auf dem Verschiebungswert, welcher basierend auf dem Histogrammverschiebungswert ermittelt wird, erfolgt, wenn der weitere Ähnlichkeitswert eine vorbestimmte Bedingung erfüllt.

**9.** Verfahren (12) nach Anspruch 8,

wobei der Histogrammverschiebungswert mit einer vorgegebenen Anzahl von Rauschwerten addiert wird, um zusätzliche Histogrammverschiebungswerte zu erzeugen,
wobei die Verfahrensschritte (2) und (3) des Anspruchs 8 ferner für die zusätzlichen Histogrammverschiebungswerte durchgeführt werden und entsprechende zusätzliche Ähnlichkeitswerte erzeugt werden,
wobei der Histogrammverschiebungswert oder einer der zusätzlichen Histogrammverschiebungswerte, welcher dem betragsmäßig größten Ähnlichkeitswert des weiteren Ähnlichkeitswerts und der zusätzlichen Ähnlichkeitswerte zugehörig ist, dazu verwendet wird, um den Verschiebungswert für die Anpassung des Kantenfelds (44) zu ermitteln.

**10.** Verfahren (12) nach einem der Ansprüche 7 bis 9,
wobei die Anpassung des Kantenfelds (44) eine erste Anpassung umfasst, welche umfasst, dass für alle Balken (46) und Lücken (48) des Kantenfelds (44):

wenn die erste Schätzung kleiner als die zweite Schätzung ist, die Kanten (50) eines jeweiligen Balkens (46) um den Verschiebungswert, insbesondere in entgegengesetzte, divergierende Richtungen, derart verschoben werden, dass die Breite des jeweiligen Balkens (46) um die Hälfte des Betrags der Schätzungsdifferenz vergrößert wird, und die Kanten (50) einer jeweiligen Lücke (48) um den Verschiebungswert, insbesondere in entgegengesetzte, konvergierende Richtungen, derart verschoben werden, dass die Breite der jeweiligen Lücke (48) um die Hälfte des Betrags der Schätzungsdifferenz verkleinert wird,
wobei, wenn die erste Schätzung größer als die zweite Schätzung ist, die Kanten (50) eines jeweiligen Balkens (46) um den Verschiebungswert, insbesondere in entgegengesetzte, konvergierende Richtungen, derart verschoben werden, dass die Breite des jeweiligen Balkens (46) um die Hälfte des Betrags der Schätzungsdifferenz verkleinert wird, und die Kanten (50) der jeweiligen Lücke (48) um den Verschiebungswert, insbesondere in entgegengesetzte, divergierende Richtungen, derart verschoben werden, dass die Breite der jeweiligen Lücke (48) um die Hälfte des Betrags der Schätzungsdifferenz verkleinert wird, wobei der Verschiebungswert einem Viertel des Betrags der Schätzungsdifferenz entspricht.

11. Verfahren (12) nach einem der Ansprüche 3 bis 10, wobei die Anpassung des Kantenfelds (44) ferner eine zweite Anpassung umfasst, welche umfasst, dass:

(1) eine erste Schätzung der Referenzbreite der jeweiligen weiteren Breitenstufe auf Basis der Balkenbreitenwerte und eine zweite Schätzung der Referenzbreite der jeweiligen weiteren Breitenstufe auf Basis der Lückenbreitenwerte für jede weitere Breitenstufe der vordefinierten Anzahl von Breitenstufen gemäß dem Schätzungsverfahren nach Anspruch 3 oder 4 erfolgt,

(2) eine gemittelte geschätzte Referenzbreite für jede Breitenstufe basierend auf einer Mittelung der jeweiligen ersten Schätzung und der jeweiligen zweiten Schätzung bestimmt wird,

(3) über das Kantenfeld (44) iteriert wird,

(4) wobei für jede Kante (50) anhand der gemittelten geschätzten Referenzbreiten der Breitenstufen ermittelt wird, welcher Breitenstufe die beiden angrenzenden Barcodeelemente zugehörig sind,

(5) wobei für jede Kante (50) ferner ermittelt wird, ob ein Verschiebung der Kante (50) um einen vordefinierten Feinjustierungswert $\Delta x$ in eine der beiden Richtungen zu einer Verringerung des Abstands von beiden angrenzenden Elementen zu der gemittelten geschätzten Referenzbreite ihrer zugehörigen Breitenstufe führt, und bei einer positiven Ermittlung, eine Verschiebung der jeweiligen Kante (50) um $\Delta x$ in die entsprechende Richtung erfolgt und der Schritt (5) für die verschobene Kante wiederholt wird,

(6) wobei bei einer negativen Ermittlung keine Verschiebung der jeweiligen Kante (50) erfolgt und die vorstehenden Schritte (4) bis (6) für die nächste Kante (50) durchgeführt werden.

12. Verfahren (12) nach einem der vorstehenden Ansprüche, wobei ein finaler Ähnlichkeitswert gemäß dem Verfahren nach Anspruch 2 oder 3 für das angepasste Kantenfeld ermittelt wird, wobei eine Weiterverarbeitung auf Basis des angepassten Kantenfelds erfolgt, wenn der finale Ähnlichkeitswert größer als ein vorbestimmter finaler Ähnlichkeitsschwellenwert ist und/oder wenn der finale Ähnlichkeitswert höher als der Ähnlichkeitswert ist.

13. Verfahren zum Lesen von Barcodes, welches umfasst, dass:

mittels einer Bilderfassungsvorrichtung ein Barcode erfasst wird, auf welchem Balken (46) und zwischen den Balken (46) angeordnete Lücken (48) alternierend angeordnet sind, wobei die Breite einer jeweiligen Lücke (48) und/oder die Breite eines jeweiligen Balkens (46) einer Referenzbreite einer jeweiligen Breitenstufe einer vordefinierten Anzahl von Breitenstufen entspricht,

ein Kantenfeld (44) basierend auf dem erfassten Barcode erzeugt wird, wobei eine Kante (50) im Kantenfeld (44) einen Balken-Lücken-Übergang angibt,

unter Verwendung des Kantenfelds (44) zumindest eine erste Schätzung einer Referenzbreite einer ersten Breitenstufe auf Basis der Balkenbreitenwerte erfolgt und eine zweite Schätzung der Referenzbreite der ersten Breitenstufe auf Basis der Lückenbreitenwerte erfolgt,

basierend auf einer Differenz der ersten Schätzung und der zweiten Schätzung ein Verschiebungswert ermittelt wird, und

basierend auf dem Verschiebungswert das Kantenfeld (44) angepasst wird,

wobei der Barcode basierend auf dem angepassten Kantenfeld dekodiert wird.

14. Verfahren zum Lesen von Barcodes, welches umfasst, dass,

mittels einer Bilderfassungsvorrichtung ein Barcode erfasst wird, welcher Barcodeelemente in Form von Balken (46) und Lücken (48) umfasst, wobei die Balken (46) und die zwischen den Balken (46) angeordneten Lücken (48) alternierend angeordnet sind, wobei die Breite einer jeweiligen Lücke (48) und/oder die Breite eines jeweiligen Balkens (46) einer Referenzbreite einer jeweiligen Breitenstufe einer vordefinierten Anzahl von Breitenstufen entspricht;

ein Kantenfeld (44) basierend auf dem erfassten Barcode erzeugt wird, wobei eine Kante (50) im Kantenfeld (44) einen Balken-Lücken-Übergang angibt;

wobei eine Anpassung des Kantenfelds (44) erfolgt, welche umfasst, dass:

(1) eine erste Schätzung der Referenzbreite der jeweiligen Breitenstufe auf Basis der Balkenbreitenwerte und eine zweite Schätzung der Referenzbreite der jeweiligen Breitenstufe auf Basis der Lückenbreitenwerte für jede Breitenstufe der vordefinierten Anzahl von Breitenstufen erfolgt,

(2) eine gemittelte geschätzte Referenzbreite für jede Breitenstufe basierend auf einer Mittelung der jeweiligen ersten Schätzung und der jeweiligen zweiten Schätzung bestimmt wird,

(3) über das Kantenfeld (44) iteriert wird,

(4) wobei für jede Kante (50) anhand der gemittelten geschätzten Referenzbreiten der Breitenstufen ermittelt wird, welcher Breitenstufe die beiden angrenzenden Barcodeelemente zugehörig sind,

(5) wobei für jede Kante (50) ferner ermittelt wird, ob ein Verschiebung der Kante (50) um einen vordefinierten Feinjustierungswert $\Delta x$ in eine der beiden Richtungen zu einer Verringerung des Abstands von beiden angrenzenden Elementen zu der gemittelten geschätzten Referenzbreite ihrer zugehörigen Breitenstufe führt, und bei einer positiven Ermittlung, eine Verschiebung der jeweiligen Kante (50) um $\Delta x$ in die entsprechende Richtung erfolgt und der Schritt (5) für die verschobene Kante wiederholt wird,

(6) wobei bei einer negativen Ermittlung keine Verschiebung der jeweiligen Kante (50) erfolgt und die vorstehenden Schritte (4) bis (6) für die nächste Kante (50) durchgeführt werden;

wobei der Barcode basierend auf dem angepassten Kantenfeld dekodiert wird.

15. Codelesevorrichtung mit einer Bilderfassungsvorrichtung zum Erfassen eines Barcodes und mit einer Steuer- und Auswertungseinheit, in der ein Verfahren zum Lesen eines Barcodes nach einem der vorhergehenden Ansprüche implementiert ist.

Fig. 1

27

Erstellung eines normalisierten Balkenbreitenhistogramms und eines normalisierten Lückenbreitenhistogramms auf Basis des Kantenfelds — 28

Ermittlung einer ersten Schätzung der Modulgröße auf Basis des Balkenbreitenhistogramms und einer zweiten Schätzung der Modulgröße auf Basis des Lückenbreitenhistogramms — 30

Bestimmung eines Verschiebungswerts auf Basis der ersten Schätzung und der zweiten Schätzung — 32

Anpassung des Kantenfelds auf Basis des Verschiebungswerts — 34

Fig. 2

Ermittlung einer ersten Schätzung einer Referenzbreite einer jeweiligen Breitenstufe und einer zweiten Schätzung einer Referenzbreite einer jeweiligen Breitenstufe für jede vorhandene Breitenstufe — 36

35

Ermittlung einer jeweiligen gemittelten geschätzten Referenzbreite basierend auf der jeweiligen ersten Schätzung und der jeweiligen zweiten Schätzung für jede vorhandene Breitenstufe — 38

Anpassung der Kantenposition einer jeden Kante basierend auf einem Vergleich der Breite des angrenzenden Balkens und der Breite der angrenzenden Lücke mit der jeweils zugehörigen gemittelten geschätzten Referenzbreite — 40

Fig. 3

Fig.4

EP 4 700 647 A1

Fig.5

Fig.6

EP 4 700 647 A1

Fig.7

Europäisches
Patentamt
European
Patent Office
Office européen
des brevets

**EUROPÄISCHER RECHERCHENBERICHT**

Nummer der Anmeldung

EP 25 19 5036

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 211 291 A2 (DATALOGIC SCANNING INC [US]) 28. Juli 2010 (2010-07-28) * Absatz [0036] - Absatz [0121]; Abbildung 3 * ----- | 1-15 | INV. G06K7/14 |
| A | US 2023/367983 A1 (ZAGAYNOV IVAN [RU] ET AL) 16. November 2023 (2023-11-16) * Absatz [0064] - Absatz [0070] * ----- | 1-15 | |

RECHERCHIERTE
SACHGEBIETE (IPC)

G06K

Der vorliegende Recherchenbericht wurde für alle Patentansprüche erstellt

| Recherchenort | Abschlußdatum der Recherche | Prüfer |
|---|---|---|
| München | 23. Oktober 2025 | Thomann, Jérôme |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 19 5036

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2025

| Im Recherchenbericht angeführtes Patentdokument | Datum der Veröffentlichung | Mitglied(er) der Patentfamilie | Datum der Veröffentlichung |
|---|---|---|---|
| EP 2211291 A2 | 28-07-2010 | EP 1114390 A1 | 11-07-2001 |
| | | EP 2211291 A2 | 28-07-2010 |
| | | EP 2275966 A2 | 19-01-2011 |
| | | WO 0016242 A1 | 23-03-2000 |
| US 2023367983 A1 | 16-11-2023 | US 2023367983 A1 | 16-11-2023 |
| | | US 2024256809 A1 | 01-08-2024 |

EPO FORM P0461

Für nähere Einzelheiten zu diesem Anhang : siehe Amtsblatt des Europäischen Patentamts, Nr.12/82